# EUROPÄISCHE PATENTSCHRIFT

(11) **EP 3 681 957 B1**
(45) Veröffentlichungstag und Bekanntmachung des Hinweises auf die Patenterteilung: **28.10.2026**
(21) Anmeldenummer: 18769626.5
(22) Anmeldetag: 07.09.2018
(51) Int. Cl.: C09D 5/00, C10M 169/04, C09D 179/08, C10M 107/44, C10M 111/04, F02F 3/10, F16J 1/02, F16C 33/10, F16C 33/20, C10M 177/00

(54) **GLEITLACK, VERFAHREN ZU DESSEN HERSTELLUNG, GLEITELEMENT MIT EINEM SOLCHEN UND DESSEN VERWENDUNG**
SOLID FILM LUBRICANT, METHOD FOR PRODUCING SAME, SLIDING ELEMENT COMPRISING SAME AND USE THEREOF
VERNIS DE GLISSEMENT, SON PROCÉDÉ DE FABRICATION, ÉLÉMENT DE GLISSEMENT COMPRENANT UN TEL VERNIS DE GLISSEMENT ET SON UTILISATION

(30) Priorität: 12.09.2017 DE 102017216109
(43) Veröffentlichungstag der Anmeldung: 22.07.2020
(73) Patentinhaber: Federal-Mogul Wiesbaden GmbH, 65201 Wiesbaden (DE)
(72) Erfinder: ADAM, Achim, 64569 Nauheim (DE); SCHLÜTER, Joachim, 65201 Wiesbaden (DE)
(74) Vertreter: Kurig, Thomas
(86) Internationale Anmeldenummer: PCT/EP2018/074103
(87) Internationale Veröffentlichungsnummer: WO 2019/052905

(56) Entgegenhaltungen:
- EP-A1- 3 023 456
- EP-A2- 0 972 805
- WO-A1-2015/090597

## Beschreibung

Gleitelemente in Motoren bestehen meist aus mehrschichtigen Materialien mit speziell modifizierten Oberflächen, die die Gleiteigenschaften optimieren. In der Regel handelt es sich bei den Oberflächen von Gleitlagern um metallische Schichten, etwa auf der Basis von Blei, Zinn oder Aluminium, die durch galvanische Prozesse, Bedampfung oder durch mechanische Plattierung aufgebracht werden.

Es sind auch nichtmetallische Schichten auf Kunstharzbasis, die sogenannten Gleitlacke, bekannt, die hinsichtlich ihrer Gleiteigenschaften, Belastbarkeit und Verschleißfestigkeit durch Zugabe von Füllstoffen modifiziert sind.

Gleitbeschichtungen auf Kunstharzbasis werden seit vielen Jahren als Hilfsmittel zur Verringerung der Reibung ganz allgemein in mechanischen Konstruktionen eingesetzt. In der Regel werden Metall-, Kunststoff- und Gummiteile beschichtet, die ohne weitere Schmierung dauerhaft leicht beweglich sein müssen. In den typischen Anwendungen sind die Belastungen eher gering und die Randbedingungen wie Temperatur oder Medien unkritisch.

Kunststoffe aus vernetzten Polyimiden im Allgemeinen sind beispielsweise aus der DE 27 29 825 C2 oder der DE 11 98 547 A bekannt.

Aus verschiedenen Patentanmeldungen, wie beispielsweise der EP 0 984 182 A1 sowie ersten auf dem Markt befindlichen Gleitlagerprodukten sind auch bereits Anwendungen im Motor, z.B. für die Kurbelwellenlagerung, bekannt. Als Substrat ist üblicherweise das bekannte Spektrum der Kupfer- und Aluminiumlegierungen genannt, die Lackmatrix besteht aus Polyamidimid (PAI), Polyimid (PI), Epoxid- und Phenolharz, Polybenzimidazol (PBI) oder Polyetheretherketon (PEEK). Beispielhaft wird auf die Schrift EP 1 775 487 A1 verwiesen. Zur Verbesserung von Gleiteigenschaften und Belastbarkeit wird der Matrixkunststoff mit funktionalen Füllstoffen wie Festschmierstoffen, z.B. MoS2, WS2, BN, PTFE, keramischen Pulvern, z.B. Oxide, Nitride, Carbide, Silikate, Metallen, z.B. Al, Cu, Ag, W, Ni, Au gefüllt, siehe z.B. WO 2004/002673 A1. Die Aufbringung der Schicht erfolgt durch Sprüh- oder Druckverfahren und anschließendes thermisches Aushärten.

Die bekannten Beschichtungen weisen dennoch bei Mangelschmierzuständen unter hohen Drehzahlen eine Verschleißrate auf, durch die die Schicht bei häufigerem Auftreten dieses Zustands vollständig verschleißt. Dies kann insbesondere bei Substratmaterialien mit begrenzten Gleiteigenschaften, was allgemein bei den kupferbasierten Lagermetallen der Fall ist, zum Totalversagen der Lagerung durch Fressen führen.

Die Aufgabe dieser Erfindung ist demgemäß eine weitere Verringerung der Verschleißrate von Lackschichten auf der Basis von Imid-Polymeren bei kritischen Schmierungszuständen und hohen Drehzahlen zu erzielen. Unter den hier und im Folgenden als Imid-Polymere bezeichneten Polymeren werden solche Polymere verstanden, deren Wiederholeinheiten eine oder mehrere Imidgruppen enthalten.

Die Aufgabe wird durch ein Verfahren zur Herstellung eines Gleitlackes auf Basis eines Imid-Polymers gemäß Anspruch 1, einen Gleitlack gemäß Anspruch 9 und ein Gleitelement gemäß Anspruch 19 gelöst.

Substrat ist üblicherweise das bekannte Spektrum der Kupfer- und Aluminiumlegierungen genannt, die Lackmatrix besteht aus Polyamidimid (PAI), Polyimid (PI), Epoxid- und Phenolharz, Polybenzimidazol (PBI) oder Polyetheretherketon (PEEK). Beispielhaft wird auf die Schrift EP 1 775 487 A1 verwiesen. Zur Verbesserung von Gleiteigenschaften und Belastbarkeit wird der Matrixkunststoff mit funktionalen Füllstoffen wie Festschmierstoffen, z.B. MoS2, WS2, BN, PTFE, keramischen Pulvern, z.B. Oxide, Nitride, Carbide, Silikate, Metallen, z. B. AI, Cu, Ag, W, Ni, Au gefüllt, siehe z.B. WO 2004/002673 A1. Die Aufbringung der Schicht erfolgt durch Sprüh- oder Druckverfahren und anschließendes thermisches Aushärten.

WO 2015/090597 A1 beschreibt einen wasserbasierten, im Wesentlichen von organischen Lösungsmitteln freien Polyamidimid- bzw. PAI-Gleitlack zur Beschichtung metallischer Oberflächen. Der Gleitlack enthält insbesondere ein PAI-Bindemittel, Festschmierstoffe sowie ein Co-Vernetzungsmittel bzw. Co-Bindemittel, wobei durch den Zusatz des Co-Vernetzungsmittels die Einbrenntemperatur gesenkt und eine Blasenbildung während des Aushärtens vermindert oder vermieden werden soll. Als Festschmierstoffe werden unter anderem PTFE, Graphit, MoS₂, Bornitrid und weitere übliche Festschmierstoffe genannt.

EP 3 023 456 A1 offenbart ein Gleitlagerelement mit einer Polymerschicht, wobei die Polymerschicht Festschmierstoffpartikel und Metalloxidpartikel enthält und als Polymer ausschließlich ein Polyimidpolymer, ein Polyamidimidpolymer oder eine Mischung daraus aufweist. Die Metalloxidpartikel sind insbesondere aus Bismutvanadaten, Chrom-Antimon-Rutilen oder Mischungen daraus ausgewählt, wodurch eine verbesserte Bruchfestigkeit der Polymerschicht erreicht werden soll.

EP 0 972 805 A2 betrifft ein polyimidbasiertes Kompositmaterial, daraus hergestellte elektronische Bauteile sowie eine polyimidbasierte wässrige Dispersion. Die Dispersion enthält Partikel eines Vorläufers, die jeweils eine Polyimidkomponente und eine weitere hydrophile Polymerkomponente umfassen, wobei die Partikel in einem wässrigen Medium dispergiert sind. Das Material soll eine Kombination aus den Isolationseigenschaften des Polyimids und verbesserten Eigenschaften wie niedrigerem Elastizitätsmodul, guter Haftung, Formbarkeit und Lagerstabilität der wässrigen Dispersion bereitstellen.

Die bekannten Beschichtungen weisen dennoch bei Mangelschmierzuständen unter hohen Drehzahlen eine Verschleißrate auf, durch die die Schicht bei häufigerem Auftreten dieses Zustande vollständig verschleißt. Dies kann insbesondere bei Substratmaterialien mit begrenzten Gleiteigenschaften, was allgemein bei den kupferbasierten Lagermetallen der Fall ist, zum Totalversagen der Lagerung durch Fressen führen.

Die Aufgabe dieser Erfindung ist demgemäß eine weitere Verringerung der Verschleißrate von Lackschichten auf der Basis von Imid-Polymeren bei kritischen Schmierungszuständen und hohen Drehzahlen zu erzielen. Unter den hier und im Folgenden als Imid-Polymere bezeichneten Polymeren werden solche Polymere verstanden, deren Wiederholeinheiten eine oder mehrere Imidgruppen enthalten.

Die Aufgabe wird durch ein Verfahren zur Herstellung eines Gleitlackes auf Basis eines Imid-Polymers gemäß Anspruch 1 , einen Gleitlack gemäß Anspruch 9 und ein Gleitelement gemäß Anspruch 19 gelöst.

Das erfindungsgemäße Verfahren zur Herstellung eines Gleitlackes auf Basis eines Imid-Polymers als Harzmatrix sieht vor, dass einem nicht- oder teilimidisierten Polyamidsäure-Prepolymer oder einem imidisierten, kurzkettigen, blockierten Prepolymer in einem Lösungsmittel oder Lösungsmittelgemisch difunktionale oder cyclisierte difunktionale Verbindungen und wahlweise funktionale Füllstoffe zugesetzt werden und anschließend, in Abhängigkeit von dem Prepolymer, eine Polymerisation oder eine Imidisierung und in beiden Fällen eine Vernetzungsreaktion durchgeführt werden.

Die Aufgabe wird also durch Zusatz von difunktionalen oder cyclisierten difunktionalen Verbindungen mit vernetzungsfähigen Funktionalitäten, deshalb nachfolgend auch als "Vernetzungsmittel" bezeichnet, zur Lackformulierung gelöst, wodurch zusätzlich zur Polymerisation beziehungsweise zur Imidisierungsreaktion der Anteil der Vernetzung beim Aushärten des Lackes erhöht wird. Während ohne Vernetzungsmittel eine spontane Vernetzung der Moleküle des Prepolymers nur zufällig und als Nebenreaktion der Imidisierung vonstattengeht, sorgen die Vernetzungmittel für eine gezielte, signifikante Erhöhung des Vernetzungsanteils. Die zusätzliche Vernetzung verbessert die mechanische Beständigkeit der Harzmatrix und somit schließlich die Belastbarkeit und die Verschleißfestigkeit der Lackschicht, insbesondere bei hohen Drehzahlen und verringerter Schmierung bzw. Trockenlauf.

Die vorliegende Erfindung wird durch die Merkmale des Anspruchs 1, 7, 13 und 20 definiert. Weitere vorteilhafte Ausgestaltungen und Weiterbildungen der Erfindung sind in den abhängigen Ansprüchen angegeben. Die in der Beschreibung und den Zeichnungen dargestellten Ausführungsbeispiele dienen der näheren Erläuterung der Erfindung, ohne deren Gegenstand einzuschränken.

Das erfindungsgemäße Verfahren zur Herstellung eines Gleitlackes auf Basis eines Imid-Polymers als Harzmatrix sieht vor, dass einem nicht- oder teilimidisierten Polyamidsäure-Prepolymer oder einem imidisierten, kurzkettigen, blockierten Prepolymer in einem Lösungsmittel oder Lösungsmittelgemisch difunktionale oder cyclisierte difunktionale Verbindungen und wahlweise funktionale Füllstoffe zugesetzt werden und anschließend, in Abhängigkeit von dem Prepolymer, eine Polymerisation oder eine Imidisierung und in beiden Fällen eine Vernetzungsreaktion durchgeführt werden, wobei das Lösungsmittel oder Lösungsmittelgemisch stark polare, aprotische Lösungsmittel enthält.

Die Aufgabe wird also durch Zusatz von difunktionalen oder cyclisierten difunktionalen Verbindungen mit vernetzungsfähigen Funktionalitäten, deshalb nachfolgend auch als "Vemetzungsmittel" bezeichnet, zur Lackformulierung gelöst, wodurch zusätzlich zur Polymerisation beziehungsweise zur Imidisierungsreaktion der Anteil der Vernetzung beim Aushärten des Lackes erhöht wird. Während ohne Vernetzungsmittel eine spontane Vernetzung der Moleküle des Prepolymers nur zufällig und als Nebenreaktion der Imidisierung vonstattengeht, sorgen die Vernetzungmittel für eine gezielte, signifikante Erhöhung des Vernetzungsanteils. Die zusätzliche Vernetzung verbessert die mechanische Beständigkeit der Harzmatrix und somit schließlich die Belastbarkeit und die Verschleißfestigkeit der Lackschicht, insbesondere bei hohen Drehzahlen und verringerter Schmierung bzw. Trockenlauf.

Die difunktionalen Verbindungen lassen sich wie folgt beschreiben:

X - R' - Y.

R' bezeichnet hierin einen aromatischen, aliphatischen oder aromatisch-aliphatischen Rest; X, Y stehen für - NH₂, - NHR", - CONH₂, - CONHR", - COOH, - COZ mit Z für ein Halogen und R" für einen aromatischen, aliphatischen oder aromatisch-aliphatischen Rest, wobei X und Y hierin gleich oder unterschiedlich sein können.

Die cyclisierten difunktionalen Verbindungen lassen sich wie folgt beschreiben: 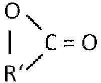 oder

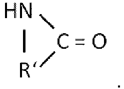

R' bezeichnet auch hierin jeweils einen aromatischen, aliphatischen oder aromatisch-aliphatischen Rest.

Die zusätzliche Vernetzung erfolgt in Abhängigkeit von den eingesetzten Prepolymeren auf zwei unterschiedlichen Reaktionswegen, die am Beispiel von Polyamidimiden (PAI) erläutert seien. Im Gebrauch sind zwei Typen von PAI-Lackrohstoffen: Solche auf der Basis von Polyamidsäure-Prepolymeren, hergestellt aus den Komponenten Diamin und Trimellithsäureanhydridchlorid und solche auf Diisocyanat- und Säureanhydrid-Basis. In dem ersten Fall sind die verwendeten difunktionalen Verbindungen in der Lage, bei der Vernetzung mit den für die intramolekulare Cyclisierung verantwortlichen Amid- und Säuregruppen mindestens zweier Moleküle des Polyamidsäure-Prepolymers (nachfolgend kurz "Polyamidsäuregruppen") zu reagieren ("Vernetzungsreaktion"). Gleichzeitig findet die Imidisierungsreaktion statt. Dabei vollzieht sich die Vernetzungsreaktion vorzugsweise ausschließlich über die restlichen Polyamidsäuregruppen, die (noch) nicht zu einem Imid cyclisiert sind. Bei den aus den IsocyanatKomponenten hergestellten Polymeren werden zunächst kurzkettige, aber begeeignete Endgruppen unterbrochen bzw. blockiert ist. Bei der Aushärtung erfolgt dann eine Kettenverlängerung durch Abspaltung der blockierenden Endgruppen und die Reaktion der kurzkettigen Prepolymere untereinander ("Polymerisation"). Obwohl die auf diese Weise hergestellten Polymere bereits vollständig imidisiert sein sollen, ist der erfindungsgemäße Effekt auch bei ihnen feststellbar. Es wird angenommen, dass es im gelösten Zustand zu Umlagerungsreaktionen mit dem vernetzenden, difunktionalen oder cyclisierten difunktionalen Zusatz ("Vernetzungsreaktion") kommen kann.

Hierin werden die "Imidisierungsreaktion" und die "Vernetzungsreaktion" im ersten Fall ebenso wie die "Polymerisation" und die "Vernetzungsreaktion" im zweiten Fall zusammengefasst als "Aushärten" bezeichnet.

Die hierfür geeigneten difunktionalen Verbindungen sind nicht ausschließlich aber besonders bevorzugt Diamine, Diamide, Dicarbonsäuren, Aminosäuren, Säurehalogenide, Dialkohole und Hydroxycarbonsäuren. Geeignete cyclisierte difunktionale Verbindungen sind solche, die sich durch Cyclisierung aus diesen bilden können, bevorzugt Lactone oder Lactame, jedoch auch Imide und Anhydride. Die difunktionalen oder cyclisierten difunktionalen Verbindungen können aromatische, aliphatische oder aromatisch-aliphatische Verbindungen oder aus beidem gemischte Verbindungen sein.

Die Kettenlängen bei aliphatischen Diaminen, Diamiden, Dicarbonsäuren, Aminosäuren, Lactamen, Lactonen, Dialkoholen und Hydroxycarbonsäuren beträgt vorzugsweise weniger als 8 C-Atome, besonders vorzugsweise weniger als 5 C-Atome; denn längere Ketten beeinträchtigen die thermische Beständigkeit des Gleitlackes.

Bevorzugt beträgt die Menge der zugesetzten difunktionalen oder cyclisierten difunktionalen Verbindungen wenigstens 1 mol-% bezogen auf die Anzahl der potenziellen Imidgruppen des Polyamidsäure-Prepolymers, beziehungsweise auf die Anzahl der vorhandenen Imidgruppen des kurzkettigen blockierten Prepolymers. Vereinfachend werden nachfolgend die potenziellen Imidgruppen des Polyamidsäure-Prepolymers und die vorhandenen Imidgruppen des kurzkettigen Prepolymers als "Imidgruppen des Prepolymers" bezeichnet.

Bereits geringe Mengen der zugesetzten difunktionalen oder cyclisierten difunktionalen Verbindungen ab 1 mol % bezogen auf die Anzahl Imidgruppen des Prepolymers verbessern die Eigenschaften einer bestimmten Lackzusammensetzung auf PAl-Basis. Bei kleineren Anteilen ist keine signifikante Verbesserung feststellbar. Zu diesen verbesserten Eigenschaften zählen die Belastbarkeit und die Verschleißfestigkeit, insbesondere bei hohen Drehzahlen und verringerter Schmierung. Hierdurch konnte die Spitzenbelastbarkeit der Kurbelwellenlager bereits bis zu 120 MPa gesteigert werden, Werte, die sonst nur von Albasierten Sputterschichten erreicht werden. Die Fressbeständigkeit, gemessen an der Überlebensdauer unter standardisierten Mangelschmierbedingungen wurde gegenüber nicht zusätzlich vernetztem Binder mehr als verdreifacht.

Es wird vermutet, dass durch die vernetzenden Zusätze Verformungen vom plastischen in den elastischen Bereich verschoben werden, wodurch ein Teil des Anpassungsverschleißes und des abrasiven Verschleißanteils vermieden werden kann. Hierdurch steigt sowohl die Belastungsgrenze, als auch die Verschleißresistenz bei hohem Energieeintrag an, etwa bei hohen Drehzahlen oder Mangelschmierbedingungen. Die zusätzlich vernetzten Schichten bewirken daher auch eine signifikant erhöhte Betriebssicherheit der Lager bei Belastungen unterhalb der Belastungsgrenze.

Anteile von über 35 mol% führen zu einer starken Veränderung der Kristallinität der Harzmatrix. Deshalb beträgt die Menge der zugesetzten difunktionalen Verbindungen vorzugweise höchstens 35 mol-% bezogen auf die Anzahl der Imidgruppen des Prepolymers.

Besonders bevorzugt sind Anteile der zugesetzten difunktionalen oder cyclisierten difunktionalen Verbindungen von 3 bis 25 mol% und ganz besonders bevorzugt von 5-20 mol%.

Das Amidsäure-Prepolymer und das kurzkettige blockierte Prepolymer sind bevorzugt ausgewählt aus der Gruppe von Prepolymeren zur Herstellung von Polyimiden (PI), Polyamidimiden (PAI), Polyetherimiden (PEI) und Polyesterimiden.

Als vernetzbare Harzmatrix für den Gleitlack besonders geeignete und daher bevorzugte Imid-Polymere sind nämlich aufgrund ihrer hohen Temperatur und Medienbeständigkeit PI, PAI, PEI und Polyesterimide.

Typischerweise geht das Aushärten, also im Einzelnen die Polymerisation oder die Imidisierung und in beiden Fällen die Vernetzungsreaktion, durch Energiezufuhr, vorzugsweise in Form von Wärme, vonstatten.

Zur Zeit werden weitere Lösemittel auf ihre Eignung untersucht, da starke polare, aprotische Lösungsmittel entweder toxisches Potential oder Kompromisse hinsichtlich der Verarbeitungseigenschaften wie Trocknung und Fließverhalten aufweisen.

Der erfindungsgemäße Gleitlack ist nach einem wie vorstehend beschriebenen Verfahren hergestellt und umfasst dementsprechend ein Imid-Polymer, insbesondere ein Imid-Polymer aus der vorstehend genannten Gruppe, als Harzmatrix, dessen Moleküle zusätzlich zur Vernetzung beitragende Reste der difunktionalen oder cyclisierten difunktionalen Verbindungen aufweisen, und wahlweise funktionale Füllstoffe. Als "Gleitlack" wird hier der fertig ausgehärtete Gleitlack ohne Lösungsmittel bezeichnet.

Zur Anpassung der Schichteigenschaften des Gleitlackes an die Zielsetzung in der jeweiligen Anwendung kommen besagte funktionale Füllstoffe zum Einsatz. Diese nehmen nicht an der Vernetzungsreaktion und der Imidisierungsreaktion der Prepolymere teil. Sie liegen möglichst gleichmäßig dispergiert in dem Gleitlack vor.

Der Anteil der funktionalen Füllstoffe beträgt maximal 75 Vol.-% bezogen auf den ausgehärteten Gleitlack. Wie auch "Gleitlack" bezeichnen die Begriffe "ausgehärteter Gleitlack" oder "ausgehärtete Gleitlackschicht" oder "vernetzter Gleitlack" oder "vernetzte Gleitlackschicht" hierin den Gleitlack bzw. die aus diesem gebildete Schicht nach dem Aushärten ohne Berücksichtigung des Lösungsmittels.

Bevorzugt enthalten die funktionalen Füllstoffe wahlweise einen oder mehrere der Stoffe Festschmierstoffe, Hartstoffe und die Wärmeleitfähigkeit verbessernde oder die Benetzung der Lackoberfläche beeinflussende Stoffe.

Der Zusatz von Festschmierstoffen verbessert die Notlaufeigenschaften, d.h. das Verhalten bei nicht hydrodynamischen Betriebszuständen. Als Verschleißminderer oder zur Konditionierung einer Welle kommen Hartstoffe zum Einsatz und die Wärmeleitfähigkeit verbessernde Stoffe dienen dem schnellen Abtransport von Reibungswärme und damit der Dauerbelastbarkeit.

Als Festschmierstoffe kommen bevorzugt Metallsulfide mit Schichtstruktur wie MoS₂, WS₂, SnS₂, Graphit, hexagonales BN, Polytetraflourethylen (PTFE) oder ZnS/BaSO₄-Gemische zum Einsatz.

Als Hartstoffe werden vorzugsweise Nitride, Carbide, Boride, Oxide, z.B. SiC, Si₃N₄, B₄C₃, kubisches BN, oder SiO₂ verwendet.

Als die Wärmeleitfähigkeit verbessernde Stoffe sind vorzugsweise eines oder mehrere Metallpulver, insbesondere bestehend aus Ag, Pb, Au, Sn, Al, Bi oder Cu enthalten.

Die Benetzung und die Oberflächeneigenschaften können z.B. durch sehr feinkörnige Füllstoffe wie z.B. Fe₂O₃ oder TiO₂ oder dessen Mischoxide beeinflusst werden.

Als besonders wirkungsvolle weitere funktionale Füllstoffe haben sich Eisen-(III)-oxid und Nickel-Antimon-Titan-Mischphasenoxid in einer Menge bis zu 15 Vol.-%, vorzugsweise 1-10 Vol-%, jeweils bezogen auf den ausgehärteten Gleitlack, erwiesen. Auch mit dem Oxidzusatz soll der gesamte Anteil funktionaler Füllstoffe an dem ausgehärteten Gleitlack insgesamt 75 Vol.-% nicht überschreiten.

Die Menge dieser Zusätze ist so zu wählen, dass der Gesamtvolumenanteil 75 % des ausgehärteten Gleitlackes nicht übersteigt. Dabei ist der Volumenanteil der Hartstoffe vorteilhafter Weise nicht größer als 10 % und der der Metallpulver nicht größer als 30 %

Größere Hartstoffanteile verschlechtern die Gleiteigenschaften und wirken sich abrasiv auf die Wellenlauffläche aus. Größere Metallanteile lassen sich schlecht dispergieren und sind daher schlecht für die Verarbeitungseigenschaften.

Das erfindungsgemäße Gleitelement weist eine metallische Substratschicht und einen darauf aufgebrachten Überzug aus wenigstens einem Gleitlack der vorstehend beschriebenen Art auf.

Die Dicken der vernetzten Gleitlackschichten in dem fertigen Gleitelement betragen vorteilhafter Weise zwischen 1 und 50 µm. Dabei ist die Dicke, wie für Gleitelemente üblich, der Bauteilgröße angepasst, d.h. besonders bevorzugt sind Dicken von 5 bis 25 µm für Lager mit Durchmessern bis 130 mm. Unter 5 µm geht die Anpassungsfähigkeit verloren und über 25 µm nimmt die Belastbarkeit der Schicht stark ab. Bei Großlagern mit einem Durchmesser über 130 mm sind dennoch Schichtdicken der Gleitlackschichten bis zu 50 µm vertretbar, weil bei diesen ein erhöhter Einlaufverschleiß durch Geometriefehler bzw. größere Toleranzbereiche zu erwarten ist.

Die exponierte Oberfläche der metallischen Substratschicht, die mit dem Überzug versehen ist, hat vorzugsweise eine Rauheit von R_{z} = 1 bis 10 µm, besonders bevorzugt von R_{z} = 3 bis 8 µm. **In** diesem Bereich wurde einerseits eine verbesserte Haftung festgestellt und andererseits führt die raue Oberfläche dazu, dass bei teilweisem Verschleiß des Überzuges zunächst nur die Spitzen, d.h. sehr geringe Oberflächenanteile der metallischen Substratschicht freigelegt werden, was die Tragfähigkeit der Oberfläche erhöht, ohne gleich die Fressanfälligkeit größerer freigelegter Bereiche des metallischen Substrats aufzuweisen.

Die benötigten Rauheiten können durch mechanische Verfahren wie Sandstrahlen oder Schleifen, jedoch auch chemisch durch Phosphatieren oder Anätzen erzeugt werden. Neben den unregelmäßigen Rauheiten sind auch regelmäßige Substratstrukturen vorteilhaft, die etwa durch Bohren, Räumen oder Prägen entstehen können.

Als besonders vorteilhaft hat sich das Strahlen mit Hartpartikeln erwiesen. Es wird angenommen, dass durch geringe Partikelrückstände in der Oberfläche eine zusätzliche Verbesserung der Verschleißbeständigkeit erreicht werden kann, wenn das Lagermetall durch Anpassungseffekte oder anders verursachten Verschleiß der Lackschicht lokal freigelegt wird.

Die metallische Substratschicht kann ihrerseits aus einer einzelnen Metallschicht oder einem Schichtverbund mehrerer funktional unterschiedlicher Metallschichten bestehen. Die jeweils exponierte Schicht der Substratschicht, auf welcher der Überzug aus dem Gleitlack aufgebracht ist, kann daher aus unterschiedlichen Metallen oder Metalllegierungen, insbesondere einer Cu-, Al-, Ni-, Sn-, Zn-, Ag-, Au-, Bi- oder Fe-Legierung, gebildet sein.

Die metallische Substratschicht kann eine Stahlstützschicht oder eine metallische Lagermetallschicht oder eine Stahlstützschicht und eine metallische Lagermetallschicht, wahlweise eine metallische Zwischenschicht und wahlweise eine (dünne) metallische Deck- oder Gleitschicht umfassen. Sowohl die Stahlstützschicht als auch die Lagermetallschicht können, je nach den geforderten Eigenschaften, insbesondere der Festigkeit, einzeln oder in Kombination in der Substratschicht vorliegen oder diese bilden.

Bildet eine Gleitschicht die exponierte Schicht der Substratschicht, ist der Überzug des Gleitlackes vorzugsweise als Einlaufschicht zur Anpassung oder Konditionierung des Gegenläufers, bei einem Radiallager des Wellenmaterials, ausgebildet.

Eine "Einlaufschicht zur Konditionierung eines Gegenläufers" im Sinne dieser Lehre setzt wenigstens eine der folgenden Maßnahmen voraus: Zusatz von Hartstoffen von mindestens 0,5 Gew.-%, bezogen auf die ausgehärtete Gleitlackschicht; geringer Zusatz von Vernetzungsmitteln von 1 bis 15 mol- %, bezogen auf die Anzahl der Imidgruppen des Prepolymers. Durch die Auswahl eines geringen Zusatzes an Vernetzungsmittel resultiert ein vergleichsweise geringerer Vernetzungsgrad der Einlaufschicht, bei der durchaus ein gewisser Anpassungsverschleiß gewünscht ist.

Eine "Einlaufschicht zur Anpassung" im Sinne dieser Lehre erhält man ebenfalls durch einen nur geringen Zusatz an Vernetzungsmitteln von 1 bis 15 mol- %, bezogen auf die Anzahl der Imidgruppen des Prepolymers und einen Gehalt an Festschmierstoffen von in Summe mindestens 30 Vol-% bei gleichzeitig geringerem Gehalt an Bindemittel, d.h. Anteil der Polymermatrix.

Beide Einlaufschichten haben vorzugsweise eine Schichtdicke von 1 bis 5 µm und können besonders vorteilhaft auf hochbelastbaren Sputterschichten, insbesondere auf solchen auf AlSn-Basis, sein. Aber auch auf galvanischen Gleitschichten sind die Einlaufschichten von Vorteil, insbesondere wenn die Oberfläche des Gegenläufers besonderes aggressiv ist.

Bildet die Lagermetallschicht die exponierte Metallschicht, auf welcher der Überzug aus dem Gleitlack aufgebracht ist, ist der Überzug des Gleitlackes vorzugsweise als eigenständige Gleitschicht mit hoher Lebensdauer ausgebildet. Eine "Gleitschicht mit hoher Lebensdauer" setzt im Sinne dieser Lehre wenigstens eine der folgenden Maßnahmen voraus: Zusatz von Vernetzungsmitteln von 3 bis 25 mol- %, bezogen auf die Anzahl der Imidgruppen des Prepolymers; Schichtdicke zwischen 5 und 25 µm. Die Lebensdauerschicht soll möglichst lange halten. Dazu benötigt sie eine gewisse Verschleißfestigkeit und eine ausreichende Dicke. Der Zusatz an Vernetzungsmittel ergibt diesbezüglich eine Verbesserung und die Schichtdicke ist dementsprechend gewählt.

Vorteilhaft ist der Einsatz des Überzuges als Gleitschicht auf CuSn-, CuNiSi-, CuZn-, CuSnZn-, AlSn-, AlSi-, AlSnSi-, AlZn- Lagermetall-Legierungen.

Gemäß einer vorteilhaften Weiterbildung weist die metallische Substratschicht des Gleitelements eine Zwischenschicht, vorzugsweise aus Sn, Ni, Ag, Cu, Fe oder deren Legierungen auf der Stahlstützschicht oder, wenn vorhanden, auf der Lagermetallschicht auf, auf welcher Zwischenschicht entweder die Deck- oder Gleitschicht oder unmittelbar der Überzug aus dem Gleitlack ausgebildet ist. In letzterem Fall bildet die Zwischenschicht die exponierte Schicht der Substratschicht. Besonders bevorzugt sind Zwischenschichten aus Ni oder Ag sowie deren Legierungen.

Die Zwischenschicht ist optional und dient der Verbesserung der Bindung und/oder der Gleiteigenschaften, wenn der Überzug und, soweit vorhanden, die Deck- oder Gleitschicht vollständig verschlissen sein sollten. Die Zwischenschicht kann ihrerseits aus einer oder mehreren Einzelschichten aufgebaut sein, beispielweise aus einer Kombination einer Ni- und einer NiSn-Schicht.

Eine besondere Ausführungsform der Erfindung sieht vor, dass der Überzug ein Mehrschichtsystem aus wenigstens zwei Gleitlacken ist, von denen wenigsten ein Gleitlack gemäß der vorstehend beschriebenen Art ausgebildet ist, wobei die Gleitlacke so gestaltet sind, dass eine obere Gleitlackschicht als Einlaufschicht zur Konditionierung eines Gegenläufers auf einer unteren Gleitlackschicht ausgebildet ist, die als Gleitschicht mit hoher Lebensdauer ausgebildet ist.

Ein alternatives Mehrschichtsystem gemäß dieser Erfindung ist so aufgebaut, dass unter einer oberen Gleitlackschicht als Gleitschicht mit guten Gleit- und Anpassungseigenschaften eine untere Gleitlackschicht als Gleitschicht mit hoher Verschleißfestigkeit ausgebildet ist.

Eine "Gleitschicht mit guten Gleit- und Anpassungseigenschaften" im Sinne dieser Lehre setzt wenigstens eine der folgenden Maßnahmen voraus: Zusatz von Festschmierstoffen von in Summe 30 bis 60 Vol.-%, bezogen auf die ausgehärtete Gleitlackschicht; Zusatz von Vernetzungsmitteln von 1 bis 10 mol- %, bezogen auf die Anzahl der Imidgruppen des Prepolymers; Schichtdicke zwischen 1 und 10 µm. Hier geht es also zuerst um eine Optimierung der Gleiteigenschaften, d.h. eine Reduzierung der Reibung und eine Erhöhung der Einbettfähigkeit, worauf auch die mechanische Beständigkeit abgestimmt ist.

Eine "Gleitschicht mit hoher Verschleißfestigkeit" im Sinne dieser Lehre setzt wenigstens den Zusatz von Vernetzungsmitteln von 10 bis 25 mol- %, bezogen auf die Anzahl der Imidgruppen des Prepolymers voraus. Ihre Aufgabe ist es, die Betriebssicherheit des Gleitelements oder Lagers dadurch weiter zu erhöhen, dass sie insbesondere bezüglich ihrer Verschleißfestigkeit optimiert ist und so ein vollständiges Durchlaufen auf das Lagermetall herauszögert. Die Gleitschicht mit hoher Verschleißfestigkeit ist der Lebensdauerschicht hinsichtlich der Vernetzung ähnlich, jedoch kommt es bei letzterer eben auch noch auf deren Dicke an, die die Lebensdauer mitbestimmt.

Ein weiteres Gleitelement mit einem Mehrschichtsystem gemäß dieser Erfindung sieht vor, dass der Überzug aus wenigstens zwei Gleitlacken besteht, von denen wenigstens ein Gleitlack gemäß der vorstehend beschriebenen Art ausgebildet ist, wobei eine zusätzliche, gering oder gar nicht additivierte untere Gleitlackschicht zwischen dem metallischen Substrat und einer oberen als Gleitschicht mit guten Gleit- und Anpassungseigenschaften oder als Gleitschicht mit hoher Verschleißfestigkeit oder als Gleitschicht mit hoher Lebensdauer ausgebildeten Gleitlackschicht angeordnet ist.

Eine "gering oder gar nicht additivierte Gleitlackschicht" im Sinne dieser Lehre setzt folgende Maßnahme voraus: Anteil der funktionalen Füllstoffe 0 bis 25 Vol.-% bezogen auf den ausgehärteten Gleitlack. Diese Schicht ist bezüglich der Haftung zum Substrat optimiert und hat wie eine Grundierung den Zweck, die Anbindung der darüber liegenden Gleitlackschicht zu verbessern. Diese gering oder gar nicht additivierte Gleitlackschicht ist zudem bevorzugt dünner als die darüber liegende Gleitlackschicht und besonders bevorzugt nur von 0,5 bis 5 µm dick.

Demgemäß ist der Überzug des Gleitelements bevorzugt ein Mehrschichtsystem aus wenigstens zwei Gleitlacken, von denen wenigstens ein Gleitlack gemäß der vorstehend beschriebenen Art ausgebildet ist, wobei die Gleitlacke wenigstens hinsichtlich einer Substanz ausgewählt aus der Gruppe bestehend aus difunktionalen oder cyclisierten difunktionalen Verbindungen, Festschmierstoffen, Hartstoffen und die Wärmeleitfähigkeit verbessernden Stoffen je nach Anwendung unterschiedliche Anteile aufweisen.

Im Gegensatz zu Mehrschichtensystem mit diskreten Lagen von Gleitlackschichten sieht eine Weiterbildung der Erfindung ein Gleitelement mit einem Überzug aus einem Gradientenschichtsystem vor. Das Gradientenschichtsystem besteht aus wenigstens zwei Gleitlacken, von denen wenigstens ein Gleitlack gemäß der vorstehend beschriebenen Art ausgebildet ist, wobei über wenigstens einen Abschnitt der Schichtdicke betrachtet wenigstens eine Substanz ausgewählt aus der Gruppe bestehend aus difunktionalen oder cyclisierten difunktionalen Verbindungen, Festschmierstoffen, Hartstoffen und die Wärmeleitfähigkeit verbessernden Stoffen je nach Anwendung einen ansteigenden oder abfallenden Anteil aufweist.

Besonders bevorzugt kommen die vorstehend beschriebenen Gleitelemente, ausgebildet als Gleitlagerschale oder -buchse (als Pleuellager oder Kurbelwellenlager), in einem Verbrennungsmotor zur Verwendung. Ebenso eignet sich der Gleitlack unmittelbar als Beschichtung im Verbrennungsmotor, beispielsweise für die Kolben als Hemdbeschichtung, oder die Kolbenringe als Anti-Microwelding-Flankenbeschichtung. Der Gleitlack kann beispielsweise als Überzug verwendet werden, indem der Gleitlack auf einer metallischen Substratschicht zur Bildung eines der oben genannten Gleitelemente mit einer metallischen Substratschicht aufgebracht wird.

Weitere Merkmale, Vorteile, und Anwendungen werden nachfolgend anhand von Ausführungsbeispielen unter Heranziehung der Figuren näher erläutert. In den Figuren zeigen:
- Fig. 1: einen schematischen Schichtaufbau eines Gleitelements gemäß einem ersten Ausführungsbeispiel der Erfindung;
- Fig. 2: einen schematischen Schichtaufbau eines Gleitelements gemäß einem zweiten Ausführungsbeispiel der Erfindung;
- Fig. 3: einen schematischen Schichtaufbau eines Gleitelements gemäß einem dritten Ausführungsbeispiel der Erfindung;
- Fig. 4: einen schematischen Schichtaufbau eines Gleitelements gemäß einem vierten Ausführungsbeispiel der Erfindung und
- Fig. 5: einen schematischen Schichtaufbau eines Gleitelements gemäß einem fünften Ausführungsbeispiel der Erfindung.

Alle Ausführungsbeispiele weisen eine metallische Substratschicht 11, 21, 31, 41, 51 und einen darauf aufgebrachten Überzug 12, 22, 32, 42, 52 aus wenigstens einem erfindungsgemäßen Gleitlack auf, wobei der innere Aufbau der Substratschicht und/oder des Überzuges variieren. Die Dicke des Überzuges beträgt zwischen 1 und 50 µm, wobei die schematischen Darstellungen die realen Schichtdickenverhältnisse weder exakt noch proportional korrekt wiedergeben, sondern lediglich der Anschauung der Reihenfolge der Schichten dienen.

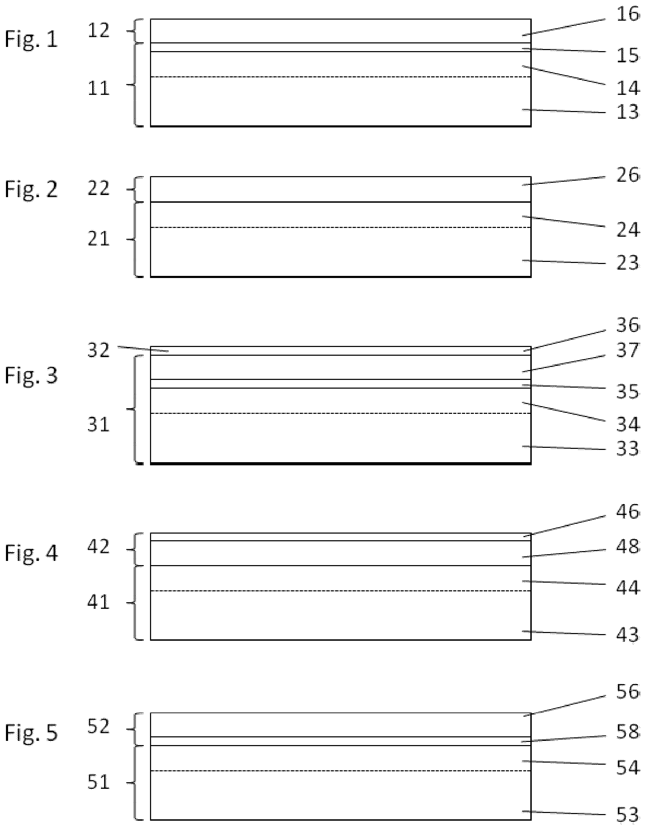

Die metallische Substratschicht 11 des Gleitelements gemäß Figur 1 weist eine Stützschicht 13, üblicherweise aus Stahl, und ein Lagermetall 14, meist basierend auf einer Cu- oder Al-Legierung, sowie eine Zwischenschicht 15 auf, die ihrerseits aus einer oder mehreren Einzelschichten aufgebaut sein kann und der Verbesserung der Bindung zwischen der Lagermetallschicht und dem Überzug 12 dient. Je nach Anwendung kann die Zwischenschicht auch so konfiguriert sein, dass sie bei Verschleiß der darüber liegenden Schicht verbesserte Gleit- oder Notlaufeigenschaften aufweist. Der Überzug 12 besteht in diesem Ausführungsbeispiel aus einer einzelnen Schicht 16 des erfindungsgemäßen Gleitlackes.

Grundsätzlich kann bei ausreichender Festigkeit des Lagermetalls in diesem und den folgenden Ausführungsbeispielen auf die Stützschicht aus Stahl verzichtet werden. Ebenso kann bei einigen Anwendungsbedingungen grundsätzlich auch die Lagermetallschicht entbehrlich sein. Die Zwischenschicht ist ebenfalls optional, wie einige der folgenden Ausführungsbeispiele zeigen.

**In** Figur 2 besteht die metallische Substratschicht 21 des Gleitelements wieder aus einer Stahlstützschicht 23 und einer Lagermetallschicht 24, auf der der Überzug 22 diesmal ohne Zwischenschicht wieder in Form einer einzelnen Schicht 26 des erfindungsgemäßen Gleitlackes aufgebracht ist.

Das Ausführungsbeispiel gemäß Figur 3 weist eine metallische Substratschicht 31 auf, welche aus einer Stahlstützschicht 33, einer Lagermetallschicht 34, einer Zwischenschicht 35 und einer darauf aufgebrachten dünnen metallischen Gleit- oder Deckschicht 37 besteht. Die Gleit- oder Deckschicht 37 ist auf die Zwischenschicht 35 gesputtert oder dort galvanisch abgeschieden. In diesem Fall dient die Zwischenschicht 35 zur verbesserten Bindung der metallischen Gleit- oder Deckschicht 37 auf der Lagermetallschicht 34. Der Überzug 32 ist in Form einer einzelnen Schicht 36 des erfindungsgemäßen Gleitlackes auf der Gleitschicht 37 aufgebracht und dient als Einlaufschicht. Als Einlaufschicht kann sowohl eine Lackkomposition Verwendung finden, die für die Konditionierung des Gegenläufers optimiert ist, als auch eine Lackkomposition, die im Hinblick auf die Anpassung optimiert ist.

Figur 4 zeigt ein Ausführungsbeispiel mit einer metallischen Substratschicht 41, welche aus einer Stahlstützschicht 43 und einer Lagermetallschicht 44 besteht. Darauf ist der Überzug 42 in Form eines Mehrschichtsystems aus wenigstens zwei Gleitlacken angeordnet, von denen wenigstens ein Gleitlack erfindungsgemäß ausgebildet ist. Der Überzug 42 weist konkret eine obere Gleitlackschicht 46, die als Einlaufschicht ausgebildet ist, und darunter eine Gleitlackschicht 48 auf, die in Kontakt mit dem Metallsubstrat 41 steht und als Gleitschicht mit hoher Lebensdauer ausgebildet ist. Die Lebensdauer-Lackschicht 48 besteht aus dem erfindungsgemäßen vernetzten Gleitlack, die darauf aufgebrachte Einlaufschicht 46 aus vernetztem oder unvernetztem Lack. Als Einlaufschicht kann auch hier eine Lackkomposition Verwendung finden, die für die Konditionierung des Gegenläufers optimiert ist, oder eine Lackkomposition, die im Hinblick auf die Anpassung optimiert ist.

Zuletzt ist in Figur 5 ein Ausführungsbeispiel mit einer metallischen Substratschicht 51 gezeigt, welche aus einer Stahlstützschicht 53 und einer Lagermetallschicht 54 besteht. Darauf ist der Überzug 52 in Form eines Mehrschichtsystems aus wenigstens zwei Gleitlacken angeordnet, von denen wenigstens ein Gleitlack erfindungsgemäß ausgebildet ist. Der Überzug 52 weist auf dem metallischen Substrat 51 eine untere Gleitlackschicht 58 und darauf einer oberen Gleitlackschicht 56 auf. Die obere Gleitlackschicht 56 bildet eine Gleitschicht mit guten Gleit- und Anpassungseigenschaften oder eine Gleitschicht mit hoher Lebensdauer. Die untere Gleitlackschicht ist bezüglich der Haftung zum Substrat optimiert und hat wie eine Grundierung den Zweck, die Anbindung der darüber liegenden Gleitlackschicht zu verbessern.

### Beispiele:

Alle im Folgenden genannten Ausführungsbeispiele wurden auf die gleiche Weise hergestellt:
Verwendung von PAI- Prepolymer in N-Ethyl-2-pyrrolidon (NEP), Mischen der Komponenten mittels Dissolver und Perlmühle bis zur völligen Homogenisierung und einer Kornfeinheit von 5 µm, ermittelt mittels Grindometermessung, Vorbehandeln der Substratwerkstoffe durch Reinigung, Entfettung, und Strahlen mit Korund, Auftragen auf die Substratwerkstoffe im Sprühverfahren, Trocknen, Aushärten bei 260°C für 20 min. Bei zinnhaltigen Aluminiumwerkstoffen als Substrat wurde die Aushärtetemperatur auf 200°C reduziert und die Aushärtedauer auf 40 min erhöht. Diese Prozesse und Prozessbedingungen wurden zwecks Vergleichbarkeit der Ergebnisse bei allen Proben gleich gewählt. Die Erfindung ist jedoch auf Herstellung in dieser Weise nicht beschränkt.

In Tabelle 1 sind die Beispiele 1 bis 7 von Gleitelementen mit dem erfindungsgemäßen Gleitlack und ein Gegenbeispiel R1, bei dem der Gleitlack kein zugesetztes Vernetzungsmittel enthält, gegenübergestellt. Alle Gleitelemente weisen eine metallische Substratschicht auf Basis einer CuNiSi- Legierung auf, auf der die Gleitlackschicht mit einer Dicke von 10 µm aufgetragen wurde. In allen Gleitlacken sind gleichermaßen 30 Vol.-% der Weichphase MoS₂ als einziger Füllstoff enthalten. Die Harzmatrix des Gleitlackes ist in allen Fällen PAI, der in allen Fällen mit Ausnahme des Gegenbeispiels 10 mol-% eines Vernetzungsmittels bezogen auf die Imidgruppen des PAI-Prepolymers beigegeben wurden. Allein das Vernetzungsmittel wurde also variiert.

Gemessen wurde jeweils die sogenannte Underwood (UW)-Belastbarkeit, worunter die höchste Belastung verstanden wird, bei der die Gleitlackschicht einen 250 Stunden Underwood-Test schadensfrei übersteht. Im hier durchgeführten Underwood Test wurde die Lagerbelastung durch eine Wellendrehzahl von 4000 UpM erreicht, wobei die Welle einen Durchmesser von 50 mm hatte und mit Exzentergewichten ausgestattet wurde, die eine zyklische Kraft erzeugten. Die spezifische Belastung wurde über die Lagerbreite eingestellt. In allen Beispielelementen 1 bis 7 kann eine signifikante Erhöhung der Underwood-Belastbarkeit gegenüber dem Gleitelement R1 ohne Vernetzungsmittel festgestellt werden. Die besten Ergebnisse wurden mit den Vernetzungsmitteln Bernsteinsäure und Succinimid erzielt.

Weiterhin wurde jeweils der Fress-Index gemessen, unter dem die mittlere Laufzeit in Stunden verstanden wird, die in einem Test in einem über eine Welle angetriebenen Einzylinder-Prüfstand ohne Kompression bei 6700 UpM und Mangelschmierung bis zum Fressen erreicht wird. Testdauer ist maximal 35 h, der Wellen- bzw. Lagerinnendurchmesser betrug auch hier 50 mm. Die Welle war aus Stahl. Deutlich ist auch hier eine Erhöhung des Fress-Index bei Zugabe des Vernetzungsmittels zu verzeichnen. Die besten Ergebnisse erzielten hierbei die Vernetzungsmittel Bernsteinsäure, Caprolactam und Bernsteinsäureanhydrid.

In Tabelle 2 sind die Beispiele 8 bis 12 und zwei Referenzen R2 und R3 gegenübergestellt, die den erfindungsgemäßen Gleitlack mit zugesetzten difunktionalen Verbindungen als Vernetzungsmittel aufweisen. Alle Gleitelemente weisen die gleiche metallische Substratschicht auf wie die Beispiele 1 bis 7 zuvor. Auch ist die Gleitlackschicht wieder mit einer Dicke von 10 µm in der gleichen Weise darauf aufgetragen. Ebenfalls unverändert sind in allen Gleitlacken 30 Vol.-% der Weichphase MoS₂ als einziger Füllstoff enthalten. Zudem wurden in allen Beispielen 8 bis 12 und auch in den Referenzen R2 und R3 auch das gleiche Vernetzungsmittel Bernsteinsäure verwendet, diese allerdings in unterschiedlicher Konzentration. Die Harzmatrix des Gleitlackes ist in allen Fällen wiederum PAI. Gemessen wurden wieder in der gleichen Weise die UW-Belastbarkeit und der Fress-Index.

Festgestellt werden kann, dass bei einer Vernetzer-Menge von 1 mol-% bis wenigstens 34 mol-% bezogen auf die Imidgruppen des PAI-Prepolymers zu einer Verbesserung mindestens eines der beiden gemessenen Parameter und somit der Eigenschaften Belastbarkeit und Fressbeständigkeit kommt, vergleiche Beispiele 8-12 mit Vergleichsbeispiel R1 in Tabelle 1. Die maximale Verbesserung in der Summe beider Eigenschaften konnte bei 15 mol-% Bernsteinsäure bezogen auf die Imidgruppen des PAI-Prepolymers festgestellt werden, wobei die Verbesserung zugleich in einem breiten Bereich von 5 bis 25 mol-% signifikant ist. Hingegen konnte bei 0,5 mol-% bezogen auf die Imidgruppen des PAI-Prepolymers noch keine Veränderung der Eigenschaften festgestellt werden, vgl. Referenz R2, und bei 37 mol-% gab es sogar wieder eine Verschlechterung beider Eigenschaften, vergleiche Referenz R3.

In Tabelle 3 sind verschiedene Beispiele 13 bis 22 von Gleitelementen mit Variation der Harzmatrix des Gleitlackes, der Kupferlegierung der metallischen Substratschicht, der Vernetzungsmittel in dem Gleitlack, des Vernetzergehaltes, der Festschmierstoffe in dem Gleitlack, der Hartstoffe und anderer Zusätzen in dem Gleitlack und der Schichtdicke der Gleitlackschicht jeweils einem Vergleichsbeispiel des Gleitelements ohne Vernetzer aber mit ansonsten identischem Aufbau gegenübergestellt. Allen Beispielen gemeinsam ist lediglich, dass das Substratmaterial auf einer Kupfermatrix basiert. Die Vergleichsbeispiele haben die Bezeichnungen R13 bis R22, wobei die Zahlen die Zugehörigkeit zu der erfindungsgemäßen Ausführungsform gleicher Nummerierung anzeigen. Gemessen wurden in der gleichen Weise auch hier die UW-Belastbarkeit und der Fress-Index.

Es zeigt sich, dass durch die Vernetzerzugabe unabhängig von den variablen Parametern grundsätzlich eine Verbesserung von Belastung und Fressbeständigkeit erzielbar ist. **In** Einzelfällen verbessert sich die Fressbeständigkeit sogar um mehr als das Dreifache und die Belastbarkeit um 35% gegenüber dem entsprechenden Vergleichsbeispiel.

**In** Tabelle 4 sind analog zu Tabelle 3 verschiedene Beispiele 23 bis 27 von Gleitelementen mit Variation der Harzmatrix des Gleitlackes, der Aluminiumlegierung der metallischen Substratschicht, der Vernetzungsmittel in dem Gleitlack, des Vernetzergehaltes, der Festschmierstoffe in dem Gleitlack, der Hartstoffe und anderer Zusätzen in dem Gleitlack und der Schichtdicke der Gleitlackschicht jeweils einem Vergleichsbeispiel des Gleitelements ohne Vernetzer aber mit ansonsten identischem Aufbau gegenübergestellt. Allen Beispielen gemeinsam ist, dass das Substratmaterial auf einer Aluminiummatrix basiert, was sie zugleich von den Beispielen in Tabelle 3 unterscheidet. Die Vergleichsbeispiele haben die Bezeichnungen R23 bis R27, wobei auch hier die Zahlen die Zugehörigkeit zu der erfindungsgemäßen Ausführungsform gleicher Nummerierung anzeigen. Gemessen wurden in der gleichen Weise auch hier die UW-Belastbarkeit und der Fress-Index.

Es zeigt sich abermals, dass durch die Vernetzerzugabe unabhängig von den variablen Parametern eine Verbesserung von Belastung und/oder Fressbeständigkeit erzielbar ist, wenngleich auch nicht in der deutlichen Ausprägung der Kupfer-basierten Substratwerkstoffe. Dies liegt zum einen daran, dass die Aluminiumwerkstoffe grundsätzlich eine geringere Grundfestigkeit aufweisen als die Kupferwerkstoffe, was durch die Gleitlackschicht nur bedingt ausgeglichen werden kann. Zum anderen ist der Fressindex bei den Aluminium-basierten Substratwerkstoffen schon in der Vergleichskonfiguration so hoch, dass in den meisten Beispielfällen die maximale Testdauer überschritten wurde, sodass in diesen Fällen keine Aussage über eine Verbesserung der Eigenschaft getroffen werden kann. Hierfür können die deutlich besseren Notlaufeigenschaften der Al-Schicht verantwortlich gemacht werden, die die Eigenschaftsmessung der Gleitlackschicht überlagern.

Tabelle 5 hat Beispiele 28 bis 30 und entsprechende Gegenbeispiele R28 bis R30 ohne Vernetzer aber mit ansonsten identischem Aufbau zum Gegenstand bei denen eine auf die Lagermetallschicht aus CuSn8Ni galvanisch aufgetragene metallische Zwischenschicht aus Ni, Ni/SnNi oder Ag die metallische Substratschicht bildet, auf der der Überzug des Gleitlackes vorzugsweise als Gleitschicht mit hoher Lebensdauer ausgebildet ist. Sowohl die Harzmatrix PAI als auch das Vernetzungsmittel Bernsteinsäure des Gleitlackes sind bei allen erfindungsgemäßen Beispielen gleich. Die Gleitelemente variieren indes in der Zusammensetzung und der Dicke der Zwischenschicht, in dem Vernetzergehalt, in der Art und Menge der dem Gleitlack zugesetzten funktionale Füllstoffe und der Schichtdicke der Gleitlackschicht. Gemessen wurden in der gleichen Weise auch hier die UW-Belastbarkeit und der Fress-Index.

Obwohl die Kombinationen mit einer metallischen Zwischenschicht bereits ohne Vernetzung schon sehr gute UW-Lastwerte erbringen, ist auch hier durch die Vernetzerzugabe in allen Fällen nochmal eine Verbesserung der Belastbarkeit und vor allem der Fressbeständigkeit erkennbar.

Die Ausführungsbeispiele 31 bis 33 in Tabelle 6 befassen sich mit Gleitelementen, bei denen die metallische Substratschicht funktional als dünne, galvanisch aufgetragene Gleit- oder Deckschicht ausgeführt ist, auf der der Überzug des Gleitlackes als zusätzliche Einlaufschicht zur Anpassung bzw. Konditionierung des Gegenläufers ausgebildet ist. Zu jedem der Ausführungsbeispiele sind jeweils 2 Referenzen zum Vergleich angegeben. Die jeweils ersten Referenzen R31, R32 und R33 haben auf der Galvanikschicht keine polymere Einlaufschicht. Die jeweils zweiten Referenzen R31A, R32A und R33A haben auf der Galvanikschicht eine polymere Einlaufschicht aber ohne Vernetzer. Es kommen drei unterschiedliche Galvanikschichten zum Einsatz, die aber alle die gleiche Dicke aufweisen. Sowohl die Harzmatrix **PAI** als auch das Vernetzungsmittel Oxalsäure des Gleitlackes sind bei allen erfindungsgemäßen Beispielen gleich. Die Gleitelemente variieren indes in dem Vernetzergehalt, in der Art und Menge der dem Gleitlack zugesetzten funktionale Füllstoffe und der Schichtdicke der Gleitlackschicht.

Gemessen wurden in der gleichen Weise auch hier die UW-Belastbarkeit und der Fress-Index. Während bei allen Beispielen zuvor nur eine Stahlwelle beim Fresstest zum Einsatz kam wurden die Beispiele aus Tabelle 6 mit zwei unterschiedlichen Wellenmaterialien geprüft, einmal mit einer Stahlwelle und einmal mit einer Gusswelle.

Die maximale UW-Last stieg in allen Beispielfällen bereits bei Einsatz eines herkömmlichen Gleitlackes gegenüber den Lagern ohne einen solchen an. Nochmals signifikanter und durchgängig für alle Beispiele ist die Erhöhung der Belastbarkeit durch den erfindungsgemäßen Einsatz des zusätzlichen Vernetzungsmittels.

Hinsichtlich des Fressindex ist zunächst festzustellen, dass insbesondere bei den raueren Gusswellen eine Konditionierung durch Hartpartikel in dem Gleitlack eine signifikante Verbesserung bewirkt, wie die Beispiele 31 und 33 im Vergleich mit den jeweiligen Gegenbeispielen R31 und R33 zeigen. Die Zugabe des Vernetzungsmittels zum Gleitlack bewirkt insoweit keine Verschlechterung. Bei Stahlwellen (32) ist eine Verbesserung eher durch eine beschleunigte Anpassung bei höherem Festschmierstoffgehalt und ohne Hartpartikel zu erklären. In diesem Fall kann bei zusätzlichem Einsatz von Vernetzer auch eine Verschlechterung des Fressverhaltens auftreten, wenn die erhöhte Verschleißbeständigkeit die Anpassung verlangsamt. Oft kann dies aber durch eine Abstimmung der Zusammensetzung kompensiert werden. Im Hinblick auf die Anforderungen im speziellen Anwendungsfall wäre hier eine Abwägung und Gesamtbetrachtung des Eigenschaftsbildes erforderlich.

Tabelle 7 zeigt noch drei weitere Ausführungsbeispiele 34 bis 36 erfindungsgemäßer Gleitlagerelemente, bei denen der Überzug ein Mehrschichtsystem aus wenigstens zwei Gleitlacken ist, von denen eine oberen Gleitlackschicht als Gleitschicht mit guten Gleit- und Anpassungseigenschaften eine untere Gleitlackschicht als Gleitschicht mit hoher Verschleißfestigkeit ausgebildet ist. Den Beispielen gemeinsam sind das Substratmaterial (CuNi2Si), die Harzmatrix des Gleitlackes beider Gleitlackschichten (PAI) und das Vernetzungsmittel im Gleitlack (Bernsteinsäure). Variable sind die Vernetzergehalte sowohl in der unteren Schicht als auch in der oberen Schicht, wobei Beispiel 34 in der oberen Schichtgar keinen Vernetzer enthält. Ferner variabel sind die funktionalen Füllstoffe in den Gleitlacken und deren Gehalte, und die Schichtdicken beider Gleitlackschichten.

Es zeigt sich, dass jedenfalls in dem hier gesteckten Rahmen der Zusammensetzungen stets sehr gute Belastbarkeitswerte und Fress-Indizes erreicht werden.

Tabelle 8 zeigt zwei weitere Ausführungsbeispiele 37 und 38 erfindungsgemäßer Gleitlagerelemente, bei denen der Überzug ein Mehrschichtsystem aus wenigstens zwei Gleitlacken ist, von denen eine obere Gleitlackschicht als Einlaufschicht zur Konditionierung eines Gegenläufers und eine untere Gleitlackschicht als Gleitschicht mit hoher Lebensdauer ausgebildet ist. Den Beispielen gemeinsam sind wieder das Substratmaterial (CuNi2Si) und die Harzmatrix des Gleitlackes beider Gleitlackschichten (PAI). Variable sind die Vernetzungsmittel im Gleitlack und deren Gehalte sowohl in der unteren Schicht als auch in der oberen Schicht, die funktionalen Füllstoffe in den Gleitlacken und deren Gehalte, und die Schichtdicken beider Gleitlackschichten.

Es zeigt sich auch hier und im Vergleich mit den Beispielen aus Tabelle 7, dass sehr gute Belastbarkeitswerte und Fress-Indizes weniger abhängig von den variablen Parametern sind, wenn nur generell ausreichend Vernetzungsmittel in wenigstens einer der Gleitlackschichten und vorzugsweise in der Gleitschicht mit hoher Lebensdauer oder der Gleitschicht mit hoher Verschleißfestigkeit vorhanden ist.

### Tabelle 9: Beispiele für (untere) Schichten zur Haftungsverbesserung oder als Verschleißbremse

Tabelle 9 beinhaltet zwei weitere Ausführungsbeispiele 39 und 40 erfindungsgemäßer Gleitlagerelemente, bei denen der Überzug ein Mehrschichtsystem aus wenigstens zwei Gleitlacken ist. Als Variante wurden hier Lebensdauerschichten mit höherer Anpassungsfähigkeit als obere Schichten kombiniert mit dünneren unteren Schichten, die als Verschleißbremse mit geringerem Schmierstoffanteil und Hartteilchen ausgelegt sind. Durch diese Zwischenschichten lässt sich bei vollständigem Verschleiß der oberen Schichten meist ein verbessertes Fressverhalten im Vergleich zu direkt auf dem Substrat beschichteten Lebensdauerschichten erreichen. Dies ist z.B. bei Vergleich von Bsp. 40 mit Bsp. 6 zu erkennen.

**Tabelle 1**

| Nr | Substrat | Matrixpolymer | Vernetzer | Gehalt [mol%] | Festschmierstoff | Schichtdicke [µm] | max UW Last [MPa] | Fress-Index |
|---|---|---|---|---|---|---|---|---|
| R1 | CuNi2Si | PAI | keiner | | 30 vol% MoS₂ | 10 | 85 | 12 |
| 1 | CuNi2Si | PAI | Oxalsäure | 10 | 30 vol% MoS₂ | 10 | 95 | 24 |
| 2 | CuNi2Si | PAI | Bernsteinsäure | 10 | 30 vol% MoS₂ | 10 | 105 | 25 |
| 3 | CuNi2Si | PAI | Caprolactam | 10 | 30 vol% MoS₂ | 10 | 100 | 25 |
| 4 | CuNi2Si | PAI | Pentandiol | 10 | 30 vol% MoS₂ | 10 | 95 | 18 |
| 5 | CuNi2Si | PAI | Succinimid | 10 | 30 vol% MoS₂ | 10 | 105 | 22 |
| 6 | CuNi2Si | PAI | Caprolacton | 10 | 30 vol% MoS₂ | 10 | 95 | 15 |
| 7 | CuNi2Si | PAI | Bernsteinsäureanhydrid | 10 | 30 vol% MoS₂ | 10 | 100 | 25 |

**Tabelle 2**

| Nr | Substrat | Matrixpolymer | Vernetzer | Gehalt [mol%] | Festschmierstoff | Schichtdicke [µm] | max UW Last [MPa] | Fress-Index |
|---|---|---|---|---|---|---|---|---|
| R2 | CuNi2Si | PAI | Bernsteinsäure | 0,5 | 30 vol% MoS₂ | 10 | 85 | 12 |
| R3 | CuNi2Si | PAI | Bernsteinsäure | 37 | 30 vol% MoS₂ | 10 | 80 | 8 |
| 8 | CuNi2Si | PAI | Bernsteinsäure | 1 | 30 vol% MoS₂ | 10 | 90 | 13 |
| 9 | CuNi2Si | PAI | Bernsteinsäure | 5 | 30 vol% MoS₂ | 10 | 100 | 21 |
| 10 | CuNi2Si | PAI | Bernsteinsäure | 15 | 30 vol% MoS₂ | 10 | 110 | 35 |
| 11 | CuNi2Si | PAI | Bernsteinsäure | 25 | 30 vol% MoS₂ | 10 | 105 | 35 |
| 12 | CuNi2Si | PAI | Bernsteinsäure | 34 | 30 vol% MoS₂ | 10 | 90 | 9 |

**Tabelle 3**

| Nr | Substrat | Matrixpolymer | Vernetzer | Gehalt [mol%] | Festschmierstoff [vol%] | Hartstoff [vol%] | weitere [vol%] | Schichtdicke [µm] | max UW Last [MPa] | Fress-Index |
|---|---|---|---|---|---|---|---|---|---|---|
| R13 | CuNi2Si | PAI | | 0 | 15 h-BN/15 MoS₂ | 5 SiC | | 8 | 85 | 7 |
| 13 | CuNi2Si | PAI | Bernsteinsäure | 15 | 15 h-BN/15 MoS₂ | 5 SiC | | 8 | 115 | 25 |
| R14 | CuNi2Si | PAI | | 0 | 35 h-BN | 3 SiC | 6 Fe₂O₃ | 8 | 105 | 12 |
| 14 | CuNi2Si | PAI | Bernsteinsäure | 15 | 35 h-BN | 3 SiC | 6 Fe₂O₃ | 8 | 120 | 35 |
| R15 | CuNi2Si | PAI | | 0 | 20 MoS₂ | | | 10 | 85 | 8 |
| 15 | CuNi2Si | PAI | Succinimid | 20 | 20 MoS₂ | | | 10 | 100 | 22 |
| R16 | CuNi2Si | PAI | | 0 | 23 WS₂ | | | 12 | 90 | 11 |
| 16 | CuNi2Si | PAI | Caprolactam | 25 | 23 WS₂ | | | 12 | 105 | 23 |
| R17 | CuNi2Si | PAI | | 0 | 17 Graphit | | 3 (NiSbTi)O₂ | 12 | 90 | 9 |
| 17 | CuNi2Si | PAI | Succinimid | 10 | 17 Graphit | | 3 (NiSbTi)O₂ | 12 | 95 | 21 |
| R18 | CuNi2Si | PAI | | 0 | 30 PTFE | | | 9 | 80 | 18 |
| 18 | CuNi2Si | PAI | Bernsteinsäure | 20 | 30 PTFE | | | 9 | 100 | 35 |
| R19 | CuNi2Si | PI | | 0 | 35 h-BN | | | 7 | 90 | 12 |
| 19 | CuNi2Si | PI | Caprolactam | 10 | 35 h-BN | | | 7 | 105 | 28 |
| R20 | CuSn10Bi3 | PAI | | 0 | 20 MoS₂ | 5 Si₃N₄ | 3 Fe₂O₃ | 10 | 85 | 18 |
| 20 | CuSn10Bi3 | PAI | Bernsteinsäure | 5 | 20 MoS₂ | 5 Si₃N₄ | 3 Fe₂O₃ | 10 | 105 | 35 |
| R21 | CuSn10Bi3 | PEI | | 0 | 20 WS₂ | 3 SiC | | 14 | 80 | 16 |
| 21 | CuSn10Bi3 | PEI | Bernsteinsäure | 30 | 20 WS₂ | 3 SiC | | 14 | 95 | 29 |
| R22 | CuNi2Si | PAI | | 0 | 20 MoS₂ | | 15 Sn | 14 | 85 | 11 |
| 22 | CuNi2Si | PAI | Succinimid | 10 | 20 MoS₂ | | 15 Sn | 14 | 100 | 24 |

**Tabelle 4**

| Nr | Substrat | Matrixpolymer | Vernetzer | Gehalt [mol%] | Festschmierstoff [vol%] | Hartstoff [vol%] | weitere [vol%] | Schichtdicke [µm] | max UW Last [MPa] | Fress-Index |
|---|---|---|---|---|---|---|---|---|---|---|
| R23 | AlSn10Ni2MnCu | PAI | | | 25 h-BN | | | 12 | 80 | 35 |
| 23 | AlSn10Ni2MnCu | PAI | Bernsteinsäure | 20 | 25 h-BN | | | 12 | 90 | 35 |
| R24 | AlSn10Ni2MnCu | PEI | | | 30 MoS₂ | | 3 Fe₂O₃ | 9 | 80 | 35 |
| 24 | AlSn10Ni2MnCu | PEI | Bernsteinsäure | 15 | 30 MoS₂ | | 3 Fe₂O₃ | 9 | 95 | 35 |
| R25 | AlNi2MnCu | PAI | | | 45 WS₂ | 5 SiC | | 10 | 85 | 22 |
| 25 | AlNi2MnCu | PAI | Succinimid | 10 | 45 WS₂ | 5 SiC | | 10 | 95 | 30 |
| R26 | AlNi2MnCu | PI | | | 40 MoS₂ | | 5 Fe₂O₃ | 10 | 80 | 19 |
| 26 | AlNi2MnCu | PI | Bernsteinsäure | 15 | 40 MoS₂ | | 5 Fe₂O₃ | 10 | 95 | 27 |
| R27 | AlSn6Si4CuMnCr | PAI | | | 25 h-BN | | 7 Ag | 13 | 75 | 35 |
| 27 | AlSn6Si4CuMnCr | PAI | Caprolactam | 25 | 25 h-BN | | 7 Ag | 13 | 85 | 35 |

**Tabelle 5**

| Nr | Substrat | Zwischenschicht | Dicke [µm] | Matrixpolymer | Vernetzer | Gehalt [mol%] | Festschmierstoff [vol%] | Hartstoff [vol%] | weitere [vol%] | Dicke [µm] | max UW Last [MPa] | Fress-Index |
|---|---|---|---|---|---|---|---|---|---|---|---|---|
| R28 | CuSn8Ni | Ni | 5 | PAI | | 0 | 30 WS₂ | 3 Si₃N₄ | 3 Fe₂O₃ | 9 | 105 | 9 |
| 28 | CuSn8Ni | Ni | 5 | PAI | Bernsteinsäure | 15 | 30 WS₂ | 3 Si₃N₄ | 3 Fe₂O₃ | 9 | 120 | 26 |
| R29 | CuSn8Ni | Ni/SnNi | 7 | PAI | | 0 | 35 MoS₂ | 5 SiC | | 8 | 100 | 9 |
| 29 | CuSn8Ni | Ni/SnNi | 7 | PAI | Bernsteinsäure | 20 | 35 MoS₂ | 5 SiC | | 8 | 115 | 28 |
| R30 | CuSn8Ni | Ag | 4 | PAI | | 0 | 30 h-BN | | 5 Fe₂O₃ | 12 | 100 | 19 |
| 30 | CuSn8Ni | Ag | 4 | PAI | Bernsteinsäure | 25 | 30 h-BN | | 5 Fe₂O₃ | 12 | 115 | 35 |

**Tabelle 6**

| Nr | Substrat | Gleitschicht | Matrixpolymer | Vernetzer | Gehalt [mol%] | Festschmierstoff [vol%] | Hartstoff [vol%] | weitere [vol%] | Dicke [µm] | max UW Last [MPa] | Fress-Index Stahl | Fress-Index Guss |
|---|---|---|---|---|---|---|---|---|---|---|---|---|
| R31 | CuSn8Ni | Ni/SnCu6 | | | | | | | | 80 | 7 | 4 |
| R31A | CuSn8Ni | Ni/SnCu6 | PAI | | | 40 MoS₂ | 7 SiC | 3 Fe₂O₃ | 3 | 90 | 15 | 35 |
| 31 | CuSn8Ni | Ni/SnCu6 | PAI | Oxalsäure | 22 | 40 MoS₂ | 7 SiC | 3 Fe₂O₃ | 3 | 100 | 7 | 35 |
| R32 | CuSn8Ni | Ni/SnNi/SnCu6 | | | | | | | | 85 | 8 | 4 |
| R32A | CuSn8Ni | Ni/SnNi/SnCu6 | PAI | | | 25 h-BN/25 MoS₂ | | 3 Fe₂O₃ | 5 | 90 | 35 | 4 |
| 32 | CuSn8Ni | Ni/SnNi/SnCu6 | PAI | Oxalsäure | 10 | 25 h-BN/25 MoS₂ | | 3 Fe₂O₃ | 5 | 105 | 35 | 4 |
| R33 | CuSn8Ni | Ag/Bi | | | | | | | | 80 | 22 | 3 |
| R33A | CuSn8Ni | Ag/Bi | PAI | | | **35** WS₂ | 5 Si₃N₄ | | 3 | 85 | 17 | 35 |
| 33 | CuSn8Ni | Ag/Bi | PAI | Oxalsäure | 23 | **35** WS₂ | 5 Si₃N₄ | | 3 | 100 | 17 | 35 |

**Tabelle 7**

| Nr | Substrat | Matrixpolymer | untere Schicht [vol%] | Vernetzer unten [mol%] | Dicke [µm] | obere Schicht [vol%] | Vernetzer oben [mol%] | Dicke [µm] | max UW Last [MPa] | Fress-Index |
|---|---|---|---|---|---|---|---|---|---|---|
| 34 | CuNi2Si | PAI | 35 h-BN, 8 Fe₂O₃ | 30 Bernsteins. | 11 | 45 h-BN, 3Fe₂O₃ | 0 | 5 | 115 | 35 |
| 35 | CuNi2Si | PAI | 40 MoS₂, **5** (NiSbTi)O₂ | 25 Bernsteins. | 11 | 50 MoS₂, 5Fe₂O₃ | 3 Bernsteins. | 4 | 115 | 35 |
| 36 | CuNi2Si | PAI | 40 WS₂, 5 SiC | 20 Bernsteins. | 8 | 50 h-BN, 3Fe₂O₃ | 5 Bernsteins. | 5 | 110 | 35 |

**Tabelle 8**

| Nr | Substrat | Matrixpolymer | untere Schicht [vol%] | Vernetzer unten [mol%] | Dicke [µm] | obere Schicht [vol%] | Vernetzer oben [mol%] | Dicke [µm] | max UW Last [MPa] | Fress-Index |
|---|---|---|---|---|---|---|---|---|---|---|
| 37 | CuNi2Si | PAI | 30 h-BN, 10 MoS₂, 8 Fe₂O₃ | 20 Caprolactam | 12 | 40 MoS₂, 7 SiC, 3 Fe₂O₃ | 30 Caprolactam | 4 | 120 | 35 |
| 38 | CuNi2Si | PAI | 30 MoS₂, 10 PTFE, 5 (NiSbTi)O₂ | 23 Oxalsäure | 10 | 35 WS₂, 5 Si₃N₄ | 13 Oxalsäure | 3 | 110 | 35 |

**Tabelle 9**

| Nr | Substrat | Matrixpolymer | untere Schicht [vol%] | Vernetzer unten [mol%] | Dicke [µm] | obere Schicht [vol%] | Vernetzer oben [mol%] | Dicke [µm] | max UW Last [MPa] | Fress-Index |
|---|---|---|---|---|---|---|---|---|---|---|
| 39 | CuNi2Si | PAI | 15 MoS₂, 10 Fe₂O₃, 5 SiC | 30 Oxalsäure | 4 | 35 MoS₂, 5 Graphit | 15 Pentandiol | 10 | 105 | 22 |
| 40 | CuNi2Si | PAI | 10 h-BN, 5 Graphit, 6 (NiSbTi)O₂, 6 Si₃N₄ | 30 Bernsteinsäureanhydrid | 3 | 30 MoS₂ | 15 Caprolacton | 12 | 100 | 20 |

### Bezugszeichenliste

- 11: metallisches Substrat
- 12: Überzug
- 13: Stahlstützschicht
- 14: Lagermetallschicht
- 15: Zwischenschicht
- 16: Gleitlackschicht

- 21: metallisches Substrat
- 22: Überzug
- 23: Stahlstützschicht
- 24: Lagermetallschicht
- 26: Gleitlackschicht

- 31: metallisches Substrat
- 32: Überzug
- 33: Stahlstützschicht
- 34: Lagermetallschicht
- 35: Zwischenschicht
- 36: Gleitlackschicht, Einlaufschicht
- 37: metallische Gleit- oder Deckschicht

- 41: metallisches Substrat
- 42: Überzug
- 43: Stahlstützschicht
- 44: Lagermetallschicht
- 46: Gleitlackschicht, Einlaufschicht
- 48: Gleitlackschicht, Lebensdauerschicht

- 51: metallisches Substrat
- 52: Überzug
- 53: Stahlstützschicht
- 54: Lagermetallschicht
- 56: Gleitlackschicht, Lebensdauerschicht
- 58: Gleitlackschicht, Grundierung

## Patentansprüche

1. Verfahren zur Herstellung eines Gleitlackes auf Basis eines Imid-Polymers als Harzmatrix, bei dem einem nicht- oder teilimidisierten Polyamidsäure-Prepolymer oder einem imidisierten kurzkettigen blockierten Prepolymer in einem Lösungsmittel oder Lösungsmittelgemisch difunktionale oder cyclisierte difunktionale Verbindungen und wahlweise funktionale Füllstoffe zugesetzt werden und anschließend, in Abhängigkeit von dem Prepolymer, eine Polymerisation oder eine Imidisierung und in beiden Fällen eine Vernetzungsreaktion durchgeführt werden, **dadurch gekennzeichnet, dass** das Lösungsmittel oder Lösungsmittelgemisch stark polare, aprotische Lösungsmittel enthält.

2. Verfahren nach Anspruch 1,
**dadurch gekennzeichnet, dass** die Menge der zugesetzten difunktionalen oder cyclisierten difunktionalen Verbindungen wenigstens 1 mol-% bezogen auf die Anzahl der potenziellen Imidgruppen des Polyamidsäure-Prepolymers oder bezogen auf die Anzahl der vorhandenen Imidgruppen des kurzkettigen blockierten Prepolymers beträgt und/oder dass die Menge der zugesetzten difunktionalen oder cyclisierten difunktionalen Verbindungen höchstens 35 mol-% bezogen auf die Anzahl der potenziellen Imidgruppen des Polyamidsäure-Prepolymers oder bezogen auf die Anzahl der vorhandenen Imidgruppen des kurzkettigen blockierten Prepolymers beträgt.

3. Verfahren nach einem der vorstehenden Ansprüche,
**dadurch gekennzeichnet, dass** die Menge der zugesetzten difunktionalen oder cyclisierten difunktionalen Verbindungen 3 bis 25 mol-%, vorzugsweise von 5 bis 20 mol- %, bezogen auf die Anzahl der potenziellen Imidgruppen des Amidsäure-Prepolymers oder bezogen auf die Anzahl der vorhandenen Imidgruppen des kurzkettigen blockierten Prepolymers beträgt.

4. Verfahren nach einem der vorstehenden Ansprüche,
**dadurch gekennzeichnet, dass** das Polyamidsäure-Prepolymer oder das kurzkettige blockierte Prepolymer ausgewählt ist aus der Gruppe von Prepolymeren zur Herstellung von Polyimiden (PI), Polyamidimiden (PAI), Poletherimiden (PEI) und Polyesterimiden.

5. Verfahren nach einem der vorstehenden Ansprüche,
**dadurch gekennzeichnet, dass** die difunktionalen oder cyclisierten difunktionalen Verbindungen ausgewählt sind aus aromatischen oder aliphatischen oder aromatisch-aliphatischen Verbindungen der Gruppe bestehend aus Diamine, Diamide, Dicarbonsäuren, Aminosäuren, Lactame, Lactone, Imide, Anhydride, Säurehalogenide, Dialkohole und Hydroxycarbonsäuren.

6. Verfahren nach Anspruch 5,
**dadurch gekennzeichnet, dass** die difunktionalen oder cyclisierten difunktionalen Verbindungen Kettenlängen von weniger als 8 C-Atomen, vorzugsweise weniger als 5 C-Atome aufweisen.

7. Gleitlack mit einem Imid-Polymer als Harzmatrix und wahlweise funktionalen Füllstoffen, hergestellt nach dem Verfahren gemäß einem der Ansprüche 1 bis 6, wobei die Moleküle des Imid-Polymers zusätzlich zur Vernetzung beitragende Reste der difunktionalen oder cyclisierten difunktionalen Verbindungen aufweisen.

8. Gleitlack nach Anspruch 7,
**dadurch gekennzeichnet, dass** der Anteil der funktionalen Füllstoffe 75 Vol.-% bezogen auf den ausgehärteten Gleitlack nicht übersteigt und dass die funktionalen Füllstoffe wahlweise einen oder mehrere der Stoffe Festschmierstoffe, Hartstoffe und die Wärmeleitfähigkeit verbessernde Stoffe enthalten.

9. Gleitlack nach Anspruch 8,
**dadurch gekennzeichnet, dass** die Festschmierstoffe einen oder mehrere der Stoffe Metallsulfide mit Schichtstruktur, insbesondere MoS₂, WS₂, SnS₂; Graphit, hexagonales BN, Polytetrafluorethylen (PTFE), ZnS, BaSO₄ und Gemische davon enthalten.

10. Gleitlack nach Anspruch 9,
**dadurch gekennzeichnet, dass** die Hartstoffe einen oder mehrere der Stoffe Nitride, Carbide, Boride, Oxide enthalten, insbesondere SiC, Si₃N₄, B₄C₃, kubisches BN, oder SiO₂, wobei der Anteil der Hartstoffe nicht größer als 10 Vol.-% bezogen auf den ausgehärteten Gleitlack ist.

11. Gleitlack nach einem der Ansprüche 9 oder 10,
**dadurch gekennzeichnet, dass** die Wärmeleitfähigkeit verbessernden Stoffe eines oder mehrere Metallpulver aus der Gruppe bestehend aus Ag, Pb, Au, Sn, Al, Bi oder Cu enthalten, wobei der Anteil der Metallpulver nicht größer als 30 Vol.-% bezogen auf den ausgehärteten Gleitlack ist.

12. Gleitlack nach einem der Ansprüche 7 bis 11,
**dadurch gekennzeichnet, dass** die funktionalen Füllstoffe Eisen-(III)-oxid oder NiSbTi-Mischphasenoxid in einem Anteil von bis zu 15 Vol.-% bezogen auf den ausgehärteten Gleitlack, vorzugsweise 1-10 Vol-%, enthalten.

13. Gleitelement mit einer metallischen Substratschicht und einem darauf aufgebrachten Überzug aus wenigstens einem Gleitlack nach einem der Ansprüche 7 bis 12, wobei die metallische Substratschicht eine Stahlstützschicht oder eine metallische Lagermetallschicht oder eine Stahlstützschicht und eine metallische Lagermetallschicht, wahlweise eine metallische Zwischenschicht und wahlweise eine Gleitschicht umfasst, wobei auf einer exponierten Schicht der Substratschicht der Überzug aufgebracht ist und wobei die exponierte Schicht der Substratschicht vorzugsweise aus einer Cu-, Al-, Ni-, Sn-, Zn-, Ag-, Au-, Bi- oder Fe-Legierung gebildet ist.

14. Gleitelement nach Anspruch 13,
**dadurch gekennzeichnet, dass** eine Gleitschicht die exponierte Schicht der Substratschicht bildet, auf der der Überzug als Einlaufschicht zur Konditionierung eines Gegenläufers oder als Einlaufschicht zur Anpassung ausgebildet ist, wobei die Gleitschicht vorzugsweise als Sputterschicht oder als galvanische Gleitschicht ausgebildet ist.

15. Gleitelement nach Anspruch 13,
**dadurch gekennzeichnet, dass** eine Lagermetallschicht die exponierte Schicht der Substratschicht bildet, auf der der Überzug als Gleitschicht mit hoher Lebensdauer ausgebildet ist.

16. Gleitelement nach Anspruch 13,
**dadurch gekennzeichnet, dass** eine Zwischenschicht aus Sn, Ni, Ag, Cu, Fe oder deren Legierungen die exponierte Schicht der Substratschicht bildet, auf der der Überzug ausgebildet ist.

17. Gleitelement nach einem der Ansprüche 13 bis 16,
**dadurch gekennzeichnet, dass** der Überzug ein Mehrschichtsystem aus wenigstens zwei Gleitlacken ist, von denen wenigstens ein Gleitlack gemäß einem der Ansprüche 7 bis 12 ausgebildet ist, wobei eine obere Gleitlackschicht als Einlaufschicht zur Konditionierung eines Gegenläufers auf einer unteren Gleitlackschicht als Gleitschicht mit hoher Lebensdauer ausgebildet sind, oder dass der Überzug ein Mehrschichtsystem aus wenigstens zwei Gleitlacken ist, von denen wenigstens ein Gleitlack gemäß einem der Ansprüche 7 bis 12 ausgebildet ist, wobei unter einer oberen Gleitlackschicht als Gleitschicht mit guten Gleit- und Anpassungseigenschaften eine untere Gleitlackschicht mit hoher Verschleißfestigkeit ausgebildet ist.

18. Gleitelement nach einem der Ansprüche 13 bis 17,
**dadurch gekennzeichnet, dass** der Überzug ein Mehrschichtsystem aus wenigstens zwei Gleitlacken ist, von denen wenigstens ein Gleitlack gemäß einem der Ansprüche 7 bis 12 ausgebildet ist, wobei zwischen der metallischen Substratschicht und einer oberen als Gleitschicht mit guten Gleit- und Anpassungseigenschaften oder als Gleitschicht mit hoher Verschleißfestigkeit ausgebildeten Gleitlackschicht eine zusätzliche gering oder gar nicht additivierte Gleitlackschicht angeordnet ist.

19. Gleitelement nach einem der Ansprüche 13 bis 18,
**dadurch gekennzeichnet, dass** der Überzug ein Mehrschichtsystem aus wenigstens zwei Gleitlacken ist, von denen wenigstens ein Gleitlack gemäß einem der Ansprüche 7 bis 12 ausgebildet ist, wobei die wenigstens zwei Gleitlacke wenigstens hinsichtlich einer Substanz ausgewählt aus der Gruppe bestehend aus difunktionalen oder cyclisierten difunktionalen Verbindungen, Festschmierstoffen, Hartstoffen und die Wärmeleitfähigkeit verbessernden Stoffen unterschiedliche Anteile aufweisen, oder dass der Überzug ein Gradientenschichtsystem aus wenigstens zwei Gleitlacken ist, von denen wenigstens ein Gleitlack gemäß einem der Ansprüche 7 bis 12 ausgebildet ist, wobei das Gradientenschichtsystem über wenigstens einen Abschnitt der Schichtdicke betrachtet wenigstens eine Substanz ausgewählt aus der Gruppe bestehend aus difunktionalen oder cyclisierten difunktionalen Verbindungen, Festschmierstoffen, Hartstoffen und die Wärmeleitfähigkeit verbessernden Stoffen mit einem ansteigenden oder abfallenden Anteil aufweist.

20. Verwendung eines Gleitlackes nach einem der Ansprüche 7 bis 12 zur Beschichtung von Kolben, Kolbenringen, Lagerschale oder Buchse für einen Verbrennungsmotor.

## Claims

1. A method for producing a sliding coating based on an imide polymer as a resin matrix, in which difunctional or cyclized difunctional compounds and, optionally, functional fillers are added to a non- or partially-imidized polyamic acid prepolymer or an imidized short-chain blocked prepolymer in a solvent or solvent mixture, and subsequently, depending on the prepolymer, a polymerization or an imidization and in both cases a crosslinking reaction are carried out,
**characterized in that**
the solvent or solvent mixture contains highly polar, aprotic solvents.

2. The method according to claim 1,
**characterized in that**
the amount of the added difunctional or cyclized difunctional compounds is at least 1 mol% based on the number of potential imide groups of the polyamic acid prepolymer or based on the number of imide groups present in the short-chain blocked prepolymer, and / or that the amount of the added difunctional or cyclized difunctional compounds is at most 35 mol% based on the number of potential imide groups of the polyamic acid prepolymer or based on the number of imide groups present in the short-chain blocked prepolymer.

3. A method according to any of the preceding claims,
**characterized in that**
the amount of the added difunctional or cyclized difunctional compounds is 3 to 25 mol%, preferably 5 to 20 mol%, based on the number of potential imide groups of the polyamic acid prepolymer or based on the number of imide groups present in the short-chain blocked prepolymer.

4. A method according to any of the preceding claims,
**characterized in that**
the polyamic acid prepolymer or the short-chain blocked prepolymer is selected from the group of prepolymers for the production of polyimides (PI), polyamide-imides (PAI), polyetherimides (PEI), and polyesterimides.

5. A method according to any of the preceding claims,
**characterized in that**
the difunctional or cyclized difunctional compounds are selected from aromatic, aliphatic, or aromatic-aliphatic compounds of the group consisting of diamines, diamides, dicarboxylic acids, amino acids, lactams, lactones, imides, anhydrides, acid halides, diols, and hydroxycarboxylic acids.

6. A method according to claim 5,
**characterized in that**
the difunctional or cyclized difunctional compounds have chain lengths of less than 8 carbon atoms, preferably less than 5 carbon atoms.

7. A sliding coating comprising an imide polymer as a resin matrix and, optionally, functional fillers, produced by the method according to any one of claims 1 to 6, wherein the molecules of the imide polymer have residues of the difunctional or cyclized difunctional compounds that additionally contribute to crosslinking.

8. A sliding coating according to claim 7,
**characterized in that**
the proportion of functional fillers does not exceed 75 vol.% based on the cured sliding coating, and that the functional fillers optionally contain one or more of the substances solid lubricants, hard materials, and thermal-conductivity-enhancing substances.

9. A sliding coating according to claim 8,
**characterized in that**
the solid lubricants contain one or more of the substances metal sulfides having a layered structure, in particular MoS₂, WS₂, SnS₂, graphite, hexagonal BN, polytetrafluoroethylene (PTFE), ZnS, BaSO₄, and mixtures thereof.

10. A sliding coating according to claim 9,
**characterized in that**
the hard materials comprise one or more of the substances nitrides, carbides, borides, oxides, in particular SiC, Si₃N₄, B₄C₃, cubic BN, or SiO₂, wherein the proportion of the hard materials is no greater than 10 vol.% based on the cured sliding coating.

11. A sliding coating according to any one of claims 9 or 10,
**characterized in that**
the thermal-conductivity-enhancing substances contain one or more metal powders from the group consisting of Ag, Pb, Au, Sn, Al, Bi, or Cu, wherein the proportion of the metal powders is no greater than 30 vol.% based on the cured sliding coating.

12. A sliding coating according to any one of claims 7 to 11,
**characterized in that**
the functional fillers contain iron(III) oxide or NiSbTi mixed-phase oxide in a proportion of up to 15 vol.% based on the cured sliding coating, preferably 1-10 vol.%.

13. A sliding element having a metallic substrate layer and a coating applied thereto comprising at least one sliding coating according to any one of claims 7 to 12, wherein the metallic substrate layer comprises a steel support layer or a metallic bearing metal layer or a steel support layer and a metallic bearing metal layer, optionally a metallic intermediate layer and optionally a sliding layer, wherein the coating is applied to an exposed layer of the substrate layer, and wherein the exposed layer of the substrate layer is preferably formed from a Cu, Al, Ni, Sn, Zn, Ag, Au, Bi, or Fe alloy.

14. A Sliding element according to claim 13,
**characterized in that**
a sliding layer forms the exposed layer of the substrate layer, on which the coating is formed as a running-in layer for conditioning a counterface or as a running-in layer for adaptation, wherein the sliding layer is preferably formed as a sputtered layer or as an electroplated sliding layer.

15. A sliding element according to claim 13,
**characterized in that**
a bearing metal layer forms the exposed layer of the substrate layer, on which the coating is formed as a sliding layer having a long service life.

16. A sliding element according to claim 13,
**characterized in that**
an intermediate layer of Sn, Ni, Ag, Cu, Fe, or alloys thereof forms the exposed layer of the substrate layer on which the coating is formed.

17. A sliding element according to any one of claims 13 to 16,
**characterized in that**
the coating is a multilayer system comprising at least two sliding coatings, at least one of which is a sliding coating according to any one of claims 7 to 12, wherein an upper sliding coating layer is formed as a running-in layer for conditioning a counterface on a lower sliding coating layer formed as a sliding layer having a long service life, or **in that** the coating is a multilayer system comprising at least two sliding coatings, at least one of which is a sliding coating according to any one of claims 7 to 12, wherein a lower sliding coating layer having high wear resistance is formed beneath an upper sliding coating layer formed as a sliding layer having good sliding and conformability properties.

18. A sliding element according to any one of claims 13 to 17,
**characterized in that**
the coating is a multilayer system comprising at least two sliding coatings, at least one of which is a sliding coating according to any one of claims 7 to 12, wherein between the metallic substrate layer and an upper sliding coating layer which is formed as a sliding layer having good sliding and conformability properties or as a sliding layer having high wear resistance, an additional sliding coating layer is arranged having little or no additives.

19. A sliding element according to any one of claims 13 to 18,
**characterized in that**
the coating is a multilayer system comprising at least two sliding coatings, at least one of which is a sliding coating according to any one of claims 7 to 12, wherein the at least two sliding coatings have different proportions, at least with respect to one substance selected from the group consisting of difunctional or cyclized difunctional compounds, solid lubricants, hard materials, and thermal-conductivity-enhancing substances, or **in that** the coating is a gradient layer system comprising at least two sliding coatings, at least one of which is a sliding coating according to any one of claims 7 to 12, wherein, when considered over at least a portion of the layer thickness, the gradient layer system comprises at least one substance selected from the group consisting of difunctional or cyclized difunctional compounds, solid lubricants, hard materials, and thermal-conductivity-enhancing substances, having an increasing or decreasing proportion.

20. Use of a sliding coating according to any one of claims 7 to 12 for coating pistons, piston rings, a bearing shell or a bushing for an internal combustion engine.

## Revendications

1. Procédé de fabrication d'un revêtement de glissement à base d'un polymère d'imide servant de matrice de résine, dans lequel des composés difonctionnels ou difonctionnels cyclisés et, le cas échéant, des charges fonctionnelles sont ajoutés à un prépolymère d'acide polyamique non imidé ou partiellement imidé ou à un prépolymère bloqué à chaîne courte imidé, dans un solvant ou un mélange de solvants, puis, en fonction du prépolymère, une polymérisation ou une imidation est effectuée, suivie dans les deux cas d'une réaction de réticulation,
**caractérisé en ce que** le solvant ou le mélange de solvants contient des solvants aprotiques hautement polaires.

2. Procédé selon la revendication 1, **caractérisé en ce que** la quantité des composés difonctionnels ou difonctionnels cyclisés ajoutés est d'au moins 1 % en moles par rapport au nombre de groupes imide potentiels du prépolymère d'acide polyamique ou par rapport au nombre de groupes imide présents dans le prépolymère bloqué à chaîne courte, et/ou **en ce que** la quantité des composés difonctionnels ou difonctionnels cyclisés ajoutés est au plus de 35 % en moles par rapport au nombre de groupes imide potentiels du prépolymère d'acide polyamique ou par rapport au nombre de groupes imide présents dans le prépolymère bloqué à chaîne courte.

3. Procédé selon l'une quelconque des revendications précédentes, **caractérisé en ce que** la quantité des composés difonctionnels ou difonctionnels cyclisés ajoutés est comprise entre 3 et 25 % en moles, de préférence entre 5 et 20 % en moles, par rapport au nombre de groupes imide potentiels du prépolymère d'acide polyamique ou par rapport au nombre de groupes imide présents dans le prépolymère bloqué à chaîne courte.

4. Procédé selon l'une quelconque des revendications précédentes, **caractérisé en ce que** le prépolymère d'acide polyamique ou le prépolymère bloqué à chaîne courte est choisi parmi le groupe des prépolymères destinés à la production de polyimide (PI), de polyamide-imide (PAI), de polyétherimide (PEI) et de polyesterimide.

5. Procédé selon l'une quelconque des revendications précédentes, **caractérisé en ce que** les composés difonctionnels ou difonctionnels cyclisés sont choisis parmi les composés aromatiques, aliphatiques ou aromatiques-aliphatiques du groupe constitué par les diamines, les diamides, les acides dicarboxyliques, les acides aminés, les lactames, les lactones, les imide, les anhydrides, les halogénures d'acides, les diols et les acides hydroxycarboxyliques.

6. Procédé selon la revendication 5, **caractérisé en ce que** les composés difonctionnels ou difonctionnels cyclisés ont des longueurs de chaîne inférieures à 8 atomes de carbone, de préférence inférieures à 5 atomes de carbone.

7. Revêtement de glissement comprenant un polymère d'imide en tant que matrice de résine et, éventuellement, des charges fonctionnelles, produit par le procédé selon l'une quelconque des revendications 1 à 6, dans lequel les molécules du polymère d'imide comportent des résidus des composés difonctionnels ou difonctionnels cyclisés qui contribuent en outre à la réticulation.

8. Revêtement de glissement selon la revendication 7, **caractérisé en ce que** la proportion de charges fonctionnelles ne dépasse pas 75 % en volume par rapport au revêtement de glissement durci, et **en ce que** les charges fonctionnelles contiennent éventuellement une ou plusieurs des substances suivantes : lubrifiants solides, matériaux durs et substances améliorant la conductivité thermique.

9. Revêtement de glissement selon la revendication 8, **caractérisé en ce que** les lubrifiants solides contiennent une ou plusieurs des substances suivantes : des sulfures métalliques à structure en couches, en particulier MoS₂, WS₂, SnS₂, le graphite, le BN hexagonal, le polytétrafluoroéthylène (PTFE), le ZnS, le BaSO₄ et leurs mélanges.

10. Revêtement de glissement selon la revendication 9, **caractérisé en ce que** les matériaux durs comprennent une ou plusieurs des substances suivantes : nitrures, carbures, borures, oxydes, en particulier SiC, Si₃N₄, B₄C₃, BN cubique ou SiO₂, la proportion des matériaux durs n'étant pas supérieure à 10 % en volume par rapport au revêtement de glissement durci.

11. Revêtement de glissement selon l'une quelconque des revendications 9 ou 10, **caractérisé en ce que** les substances améliorant la conductivité thermique contiennent une ou plusieurs poudres métalliques choisies dans le groupe constitué par Ag, Pb, Au, Sn, Al, Bi ou Cu, la proportion des poudres métalliques n'étant pas supérieure à 30 % en volume par rapport au revêtement de glissement durci.

12. Revêtement de glissement selon l'une quelconque des revendications 7 à 11, **caractérisé en ce que** les charges fonctionnelles contiennent de l'oxyde de fer(III) ou un oxyde à phase mixte de NiSbTi dans une proportion allant jusqu'à 15 % en volume par rapport au revêtement de glissement durci, de préférence de 1 à 10 % en volume.

13. Élément de glissement comportant une couche de substrat métallique et un revêtement appliqué sur celle-ci, comprenant au moins un revêtement de glissement selon l'une quelconque des revendications 7 à 12, dans lequel la couche de substrat métallique comprend une couche de support en acier ou une couche de métal de palier ou une couche de support en acier et une couche de métal de palier, éventuellement une couche intermédiaire métallique et éventuellement une couche de glissement, dans lequel le revêtement est appliqué sur une couche exposée de la couche de substrat, et dans lequel la couche exposée de la couche de substrat est de préférence formée d'un alliage de Cu, Al, Ni, Sn, Zn, Ag, Au, Bi ou Fe.

14. Élément de glissement selon la revendication 13, **caractérisé en ce que** la couche exposée de la couche de substrat est constituée d'une couche de glissement, sur laquelle le revêtement est formé en tant que couche de rodage destinée à conditionner une contre-face ou en tant que couche de rodage destinée à l'adaptation, la couche de glissement étant de préférence formée par pulvérisation cathodique ou par galvanoplastie.

15. Élément de glissement selon la revendication 13, **caractérisé en ce qu'**une couche de métal de palier forme la couche exposée de la couche de substrat, sur laquelle le revêtement est formé en tant que couche de glissement présentant une longue durée de vie.

16. Élément de glissement selon la revendication 13, **caractérisé en ce qu'**une couche intermédiaire de Sn, Ni, Ag, Cu, Fe ou d'alliages de ceux-ci forme la couche exposée de la couche de substrat sur laquelle le revêtement est formé.

17. Élément de glissement selon l'une quelconque des revendications 13 à 16, **caractérisé en ce que** le revêtement est un système multicouche comprenant au moins deux revêtements de glissement, dont au moins l'un est un revêtement de glissement selon l'une quelconque des revendications 7 à 12, dans lequel une couche de revêtement de glissement supérieure est formée en tant que couche de rodage destinée à conditionner une contre-face sur une couche de revêtement de glissement inférieure formée en tant que couche de glissement présentant une longue durée de vie, ou **en ce que** le revêtement est un système multicouche comprenant au moins deux revêtements de glissement, dont au moins l'un est un revêtement de glissement selon l'une quelconque des revendications 7 à 12, dans lequel une couche de revêtement de glissement inférieure présentant une résistance élevée à l'usure est formée sous une couche de revêtement de glissement supérieure formée en tant que couche de glissement présentant de bonnes propriétés de glissement et d'adaptabilité.

18. Élément de glissement selon l'une quelconque des revendications 13 à 17, **caractérisé en ce que** le revêtement est un système multicouche comprenant au moins deux revêtements de glissement, dont au moins l'un est un revêtement de glissement selon l'une quelconque des revendications 7 à 12, dans lequel, entre la couche de substrat métallique et une couche de revêtement de glissement supérieure qui est formée en tant que couche de glissement présentant de bonnes propriétés de glissement et d'adaptabilité ou en tant que couche de glissement présentant une résistance élevée à l'usure, une couche de revêtement de glissement supplémentaire, ne contenant que peu ou pas d'additifs, est disposée.

19. Élément de glissement selon l'une quelconque des revendications 13 à 18,**caractérisé en ce que** le revêtement est un système multicouche comprenant au moins deux revêtements de glissement, dont au moins l'un est un revêtement de glissement selon l'une quelconque des revendications 7 à 12, dans lequel les au moins deux revêtements de glissement présentent des proportions différentes, au moins en ce qui concerne une substance choisie parmi le groupe constitué de composés difonctionnels ou difonctionnels cyclisés, de lubrifiants solides, de matériaux durs et de substances améliorant la conductivité thermique, ou **en ce que** le revêtement est un système de couches à gradient comprenant au moins deux revêtements de glissement, dont au moins l'un est un revêtement de glissement selon l'une quelconque des revendications 7 à 12, **caractérisé en ce que**, sur au moins une partie de l'épaisseur de la couche, le système de couches à gradient comprend au moins une substance choisie parmi le groupe constitué de composés difonctionnels ou difonctionnels cyclisés, de lubrifiants solides, de matériaux durs et de substances améliorant la conductivité thermique, dont la proportion augmente ou diminue.

20. Utilisation d'un revêtement de glissement selon l'une quelconque des revendications 7 à 12 pour le revêtement de pistons, de segments de piston, d'une coquille de palier ou d'une douille pour un moteur à combustion interne.
